# EUROPEAN PATENT APPLICATION

(11) **EP 4 703 873 A1**
(43) Date of publication of application: **04.03.2026**
(21) Application number: 24796283.0
(22) Date of filing: 26.04.2024
(51) Int. Cl.: G06F 8/656, G06F 8/65

(54) **UPGRADING METHOD AND RELATED APPARATUS**

(30) Priority: 28.04.2023 CN 202310489140
(71) Applicant: Shenzhen Yinwang Intelligent Technologies Co., Ltd., Shenzhen, Guangdong 518110 (CN)
(72) Inventor: MA, Tao, Shenzhen, Guangdong 518129 (CN); LIU, Qiong, Shenzhen, Guangdong 518129 (CN)
(74) Representative: Maiwald GmbH
(86) International application number: PCT/CN2024/090195
(87) International publication number: WO 2024/222913

(57) **Abstract**

An upgrade method and a related apparatus are provided, and are applied to the field of connected vehicle technologies. The method includes: A first node receives first information from a second node. The first information is used to perform over-the-air (over-the-air, OTA) upgrade on a to-be-upgraded component, the to-be-upgraded component includes at least one of a first component and a second component, the first component is a component unrelated to vehicle charging, and the second component is a component related to vehicle charging. When the to-be-upgraded component includes the first component, the first node sends second information to the first component. The second information indicates the first component to perform OTA upgrade. If the to-be-upgraded component does not include the second component, and the second component is in a charging state when the first component starts OTA upgrade, the second component maintains the charging state. According to the method, OTA upgrade can be performed in a vehicle charging process, so that OTA upgrade time and vehicle charging time can be reduced, and vehicle use efficiency can be improved.

## Description

This application claims priority to Chinese Patent Application No. 202310489140.9, filed with the China National Intellectual Property Administration on April 28, 2023 and entitled "UPGRADE METHOD AND RELATED APPARATUS", which is incorporated herein by reference in its entirety.

### TECHNICAL FIELD

This application relates to the field of connected vehicle technologies, and in particular, to an upgrade method and a related apparatus.

### BACKGROUND

An over-the-air (over-the-air, OTA) technology is a technology for downloading data through a wireless network, and is currently widely used in upgrade of devices such as vehicles, televisions, mobile phones, tablet computers, or set-top boxes. For example, for the vehicle, vehicle software may be remotely upgraded or repaired by using the OTA. A software administrator may upload software to a cloud, and the vehicle may automatically download or a user chooses to download the software from the cloud, to update local software, so as to implement function upgrade or function update of a local vehicle system. For example, an electronic control unit (electronic control unit, ECU) of the vehicle may be upgraded by using the OTA, and vehicle performance may be upgraded by upgrading the ECU. Due to convenience of OTA upgrade, the OTA technology is increasingly widely used.

However, currently, the OTA upgrade takes a long time (usually dozens of minutes to several hours), and the vehicle cannot be used in an OTA upgrade process, for example, most functions such as driving are unavailable. This severely affects vehicle use efficiency.

### SUMMARY

Embodiments of this application provide an upgrade method and a related apparatus, to perform OTA upgrade in a vehicle charging process, so as to reduce OTA upgrade time and vehicle charging time, and improve vehicle use efficiency.

According to a first aspect, an embodiment of this application provides an upgrade method, and the method may be performed by a communication apparatus. The communication apparatus may be a device, or may be a chip (system) or a circuit used in the device. This is not limited in this application. The method includes the following steps.

A first node receives first information from a second node. The first information is used to perform over-the-air OTA upgrade on a to-be-upgraded component, the to-be-upgraded component includes at least one of a first component and a second component, the first component is a component unrelated to vehicle charging, and the second component is a component related to vehicle charging.

When the to-be-upgraded component includes the first component, the first node sends second information to the first component. The second information indicates the first component to perform OTA upgrade.

If the to-be-upgraded component does not include the second component, and the second component is in a charging state when the first component starts OTA upgrade, the second component maintains the charging state.

An embodiment of this application provides an upgrade method, applied to a vehicle. The first node of the vehicle receives the first information, and sends the second information to the first component of the vehicle when the to-be-upgraded component includes the first component.

In this embodiment of this application, the first information may be understood as an OTA upgrade task delivered by the second node, and is used by the to-be-upgraded component to perform OTA upgrade. The to-be-upgraded component may include a component (the second component) related to vehicle charging, or may include a component (the first component) unrelated to vehicle charging. The second information indicates the first component to perform OTA upgrade.

It may be understood that, after receiving the OTA upgrade task delivered by the second node, when the to-be-upgraded component in the OTA upgrade task includes the first component, the first node sends the second information to the first component, to indicate the first component to perform OTA upgrade. In addition, if the to-be-upgraded component does not include the second component, and the second component is in a charging state when the first component starts OTA upgrade, the second component continues to maintain the charging state.

In comparison with a current OTA upgrade method in which vehicle use efficiency is severely affected because a vehicle cannot be used in an OTA upgrade process and OTA upgrade takes a long time, in the upgrade method in this embodiment of this application, the second information may be sent to the component (the first component) unrelated to vehicle charging, to indicate the component to perform OTA upgrade. In addition, the component (the second component) that is related to vehicle charging and does not need to perform OTA upgrade temporarily and that is in the charging state may continue to maintain the charging state without being affected by the OTA upgrade of the first component.

According to this embodiment of this application, when OTA upgrade is performed on the first component, the second component on which OTA upgrade does not need to be performed temporarily and that is in the charging state can continue to maintain the charging state, so that OTA upgrade is performed in a vehicle charging process, to reduce OTA upgrade time and vehicle charging time, and improve vehicle use efficiency.

It may be understood that the vehicle may be replaced with a terminal device. The terminal device may be a terminal device that supports a charging function, like an uncrewed aerial vehicle, an airborne vehicle, a ship, or a mobile robot, and that needs to download data through a wireless network to update local software.

Optionally, if the to-be-upgraded component does not include the second component, and the second component is not in the charging state when the first component starts OTA upgrade, the second component maintains a current operating mode.

Optionally, if the to-be-upgraded component does not include the second component, and the second component is not in the charging state when the first component starts OTA upgrade, the second component is indicated to support a charging service in a time period of an upgrade process of the first component.

In a possible implementation, the method further includes:
The first node outputs prompt information, and the prompt information indicates that a vehicle can be charged in an OTA upgrade process.

In this implementation of this application, a possible specific implementation of indicating that the vehicle can be charged in the OTA upgrade process is provided. Specifically, the first node outputs the prompt information, and the prompt information indicates that the vehicle can be charged in the OTA upgrade process.

Optionally, the prompt information may be displayed on a head unit interface, or the prompt information may be sent to a device connected to a head unit, for example, a mobile phone or an intelligent wearable device, to notify a user that the vehicle can be charged in the OTA upgrade process. For example, the user is notified in a form of screen, sound, light, electricity, vibration, or the like.

In a possible implementation, the first information includes first indication information, and the first indication information indicates whether the vehicle supports charging in the OTA upgrade process.

In this implementation of this application, a possible specific implementation of indicating whether the vehicle supports charging in the OTA upgrade process is provided. Specifically, the first information includes the first indication information, and the first indication information indicates whether the vehicle supports charging in the OTA upgrade process. It may be understood that when delivering the OTA upgrade task, the second node adds a label indicating "whether to support upgrade while charging". If the to-be-upgraded component does not include the second component, the first indication information indicates that the vehicle supports charging in the OTA upgrade process.

In a possible implementation, that the first node outputs the prompt information includes:
When the first indication information indicates that the vehicle supports charging in the OTA upgrade process, the first node outputs the prompt information.

In this implementation of this application, a possible specific implementation of indicating that the vehicle can be charged in the OTA upgrade process is provided. Specifically, when the first indication information indicates that the vehicle supports charging in the OTA upgrade process, the first node outputs the prompt information indicates that the vehicle can be charged in the OTA upgrade process. It may be understood that, when the to-be-upgraded component does not include the second component, when delivering the OTA upgrade task, the second node adds a label indicating "supporting upgrade while charging", and the first node outputs the prompt information based on the indication of the label, to indicate that the vehicle can be charged in the OTA upgrade process.

In a possible implementation, the method further includes:
The first node sends third information to the second component, and the third information indicates the second component to maintain the charging state in a process in which the first component performs OTA upgrade.

In this implementation of this application, a possible specific implementation of indicating the second component to maintain the charging state in the process in which the first component performs OTA upgrade is provided. Specifically, the first node sends the third information to the second component, the third information indicates the second component to maintain the charging state in the process in which the first component performs OTA upgrade. When the charging state is maintained, only the charging service is supported, that is, only a packet related to the charging service is processed. It may be understood that, after the first node receives the OTA upgrade task delivered by the second node, when the to-be-upgraded component in the OTA upgrade task includes the first component and does not include the second component, the first component performs OTA upgrade, and the second component is in the charging state when the first component starts OTA upgrade. In this case, the second component continues to maintain the charging state, to implement OTA upgrade in the vehicle charging process, so as to reduce the OTA upgrade time and the vehicle charging time, and improve the vehicle use efficiency.

In a possible implementation, the method further includes:
When the to-be-upgraded component includes the second component, the first node sends fourth information to the second component. The fourth information indicates the second component to start OTA upgrade, and the second component is in the charging state before OTA upgrade is performed, and is in a non-charging state when OTA upgrade is performed.

In this implementation of this application, a possible specific implementation of indicating the second component to start OTA upgrade is provided. Specifically, when the to-be-upgraded component includes the second component, the first node sends the fourth information to the second component, to indicate the second component to exit the charging state and start OTA upgrade. It may be understood that, after the first node receives the OTA upgrade task delivered by the second node, when the to-be-upgraded component in the OTA upgrade task includes the first component and includes the second component, the first component performs OTA upgrade, and the second component is in the charging state before OTA upgrade is performed, and is in the non-charging state when OTA upgrade is performed, so that the vehicle can be charged when the charging-unrelated component is upgraded, and charging of the vehicle is suspended when the charging-related component is upgraded, to reduce the OTA upgrade time and the vehicle charging time, and the improve vehicle use efficiency.

In a possible implementation, the method further includes:
The first node receives fifth information from the second component, and the fifth information indicates that the second component completes OTA upgrade.

The first node sends sixth information to the second component, and the sixth information indicates the second component to maintain the charging state in the process in which the first component performs OTA upgrade.

In this implementation of this application, a possible specific implementation of indicating the second component to resume charging is provided. Specifically, the first node receives the fifth information from the second component, and sends sixth information to the second component. The fifth information indicates that the second component completes OTA upgrade, and the sixth information indicates the second component to maintain the charging state in the process in which the first component performs OTA upgrade. It may be understood that, after the first node receives the OTA upgrade task delivered by the second node, when the to-be-upgraded component in the OTA upgrade task includes the first component and the second component, the first component performs OTA upgrade, the second component exits the charging state, and OTA upgrade is started. After the second component completes OTA upgrade, the second component resumes charging and re-enters the charging state, and may continue to maintain the charging state in the process in which the first component performs the OTA upgrade. According to this embodiment of this application, even if the charging-related component needs to be upgraded in the OTA upgrade task, impact on charging can be minimized, the OTA upgrade time and the vehicle charging time can be reduced, and the vehicle use efficiency can be improved.

In a possible implementation, after that the first node receives the first information from the second node, the method further includes:
The first node identifies the to-be-upgraded component, and determines that the to-be-upgraded component includes the first component and/or the second component.

In this implementation of this application, a possible specific implementation of identifying the to-be-upgraded component is provided. Specifically, after receiving the OTA upgrade task delivered by the second node, the first node identifies the to-be-upgraded component in the OTA upgrade task, and determines whether the to-be-upgraded component is a charging-related component or a charging-unrelated component. In this case, whether the vehicle is to be charged in the OTA upgrade process may be indicated based on whether the to-be-upgraded component is related to charging.

According to a second aspect, an embodiment of this application provides an upgrade method, and the method may be performed by a communication apparatus. The communication apparatus may be a device, or may be a chip (system) or a circuit used in the device. This is not limited in this application. The method includes the following steps.

A second node generates first information. The first information indicates the first node to perform over-the-air OTA upgrade on a to-be-upgraded component, the to-be-upgraded component includes at least one of a first component and a second component, the first component is a component unrelated to vehicle charging, and the second component is a component related to vehicle charging.

The second node sends the first information to the first node.

If the to-be-upgraded component does not include the second component, and the second component is in a charging state when the first component starts OTA upgrade, the second component maintains the charging state.

An embodiment of this application provides an upgrade method, applied to a scenario in which OTA upgrade is performed on a vehicle. A second node generates first information, and sends the first information to a first node of the vehicle.

In this embodiment of this application, the first information may be understood as an OTA upgrade task delivered by the second node, and is used by a to-be-upgraded component to perform OTA upgrade. The first node may perform OTA upgrade on the to-be-upgraded component of the vehicle based on an indication of the first information, and the to-be-upgraded component may include a component (the second component) related to vehicle charging, or may include a component (the first component) unrelated to vehicle charging.

It may be understood that, when the to-be-upgraded component in the OTA upgrade task includes the first component, the first component is indicated to perform OTA upgrade. In addition, if the to-be-upgraded component does not include the second component, and the second component is in a charging state when the first component starts OTA upgrade, the second component continues to maintain the charging state.

In comparison with a current OTA upgrade method in which vehicle use efficiency is severely affected because a vehicle cannot be used in an OTA upgrade process and OTA upgrade takes a long time, in the upgrade method in this embodiment of this application, the component (the first component) unrelated to vehicle charging is indicated to perform OTA upgrade. In addition, the component (the second component) that is related to vehicle charging and does not need to perform OTA upgrade temporarily and that is in the charging state may continue to maintain the charging state without being affected by the OTA upgrade of the first component.

According to this embodiment of this application, when OTA upgrade is performed on the first component, the second component on which OTA upgrade does not need to be performed temporarily and that is in the charging state can continue to maintain the charging state, so that OTA upgrade is performed in a vehicle charging process, to reduce OTA upgrade time and vehicle charging time, and improve vehicle use efficiency.

It may be understood that the vehicle may be replaced with a terminal device. The terminal device may be a terminal device that supports a charging function, like an uncrewed aerial vehicle, an airborne vehicle, a ship, or a mobile robot, and that needs to download data through a wireless network to update local software.

Optionally, if the to-be-upgraded component does not include the second component, and the second component is not in the charging state when the first component starts OTA upgrade, the second component maintains a current operating mode.

Optionally, if the to-be-upgraded component does not include the second component, and the second component is not in the charging state when the first component starts OTA upgrade, the second component is indicated to support a charging service in a time period of an upgrade process of the first component.

In a possible implementation, the first information includes first indication information, and the first indication information indicates whether the vehicle supports charging in the OTA upgrade process.

In this implementation of this application, a possible specific implementation of indicating whether the vehicle supports charging in the OTA upgrade process is provided. Specifically, the first information includes the first indication information, and the first indication information indicates whether the vehicle supports charging in the OTA upgrade process. It may be understood that when delivering the OTA upgrade task, the second node adds a label indicating "whether to support upgrade while charging". If the to-be-upgraded component does not include the second component, the first indication information indicates that the vehicle supports charging in the OTA upgrade process.

In a possible implementation, the method further includes:
If the to-be-upgraded component does not include the second component, the second node sends seventh information to the first node. The seventh information indicates the second component to maintain the charging state in a process in which the first component performs OTA upgrade.

In this implementation of this application, a possible specific implementation of indicating the second component to maintain the charging state in the process in which the first component performs OTA upgrade is provided. Specifically, if the to-be-upgraded component does not include the second component, the second node sends the seventh information to the first node. The seventh information indicates the second component to maintain the charging state in the process in which the first component performs OTA upgrade. It may be understood that, in the OTA upgrade task delivered by the second node to the first node, when the to-be-upgraded component in the OTA upgrade task includes the first component and does not include the second component, the first component performs OTA upgrade, and the second component is in the charging state when the first component starts OTA upgrade. In this case, the second component continues to maintain the charging state, to implement OTA upgrade in the vehicle charging process, so as to reduce the OTA upgrade time and the vehicle charging time, and improve the vehicle use efficiency.

In a possible implementation, the method further includes:
If the to-be-upgraded component includes the second component, the second node sends eighth information to the first node, and the eighth information indicates the second component to be in a non-charging state when OTA upgrade is performed.

In this implementation of this application, a possible specific implementation of indicating the second component to perform OTA upgrade is provided. Specifically, when the to-be-upgraded component includes the second component, the second node sends the eighth information to the first node, to indicate the second component to exit the charging state and start OTA upgrade, and to be in the non-charging state when OTA upgrade is performed. It may be understood that, in the OTA upgrade task delivered by the second node to the first node, when the to-be-upgraded component in the OTA upgrade task includes the first component and includes the second component, the first component performs OTA upgrade, and the second component is in the charging state before OTA upgrade is performed, and is in the non-charging state when OTA upgrade is performed, so that the vehicle can be charged when the charging-unrelated component is upgraded, and charging of the vehicle is suspended when the charging-related component is upgraded, to reduce the OTA upgrade time and the vehicle charging time, and the improve vehicle use efficiency.

In a possible implementation, the method further includes:
The second node sends ninth information to the first node. The ninth information indicates the second component to maintain, after completing OTA upgrade, the charging state in the process in which the first component performs OTA upgrade.

In an implementation of this application, a possible specific implementation of indicating the second component to resume charging is provided. Specifically, the second node sends the ninth information to the first node, and the ninth information indicates the second component to maintain, after the second component completes OTA upgrade, the charging state in the process in which the first component performs OTA upgrade. It may be understood that, in the OTA upgrade task delivered by the second node to the first node, when the to-be-upgraded component in the OTA upgrade task includes the first component and the second component, the first component performs OTA upgrade, the second component exits the charging state, and OTA upgrade is started. After the second component completes OTA upgrade, the second component resumes charging and re-enters the charging state, and may continue to maintain the charging state in the process in which the first component performs the OTA upgrade. According to this embodiment of this application, even if the charging-related component needs to be upgraded in the OTA upgrade task, impact on charging can be minimized, the OTA upgrade time and the vehicle charging time can be reduced, and the vehicle use efficiency can be improved.

In a possible implementation, before that the second node generates the first information, the method further includes:
The second node identifies the to-be-upgraded component, and determines that the to-be-upgraded component includes the first component and/or the second component.

The first information includes a label corresponding to the first component and/or a label corresponding to the second component, and the label includes a charging-related label and/or a charging-unrelated label.

In this implementation of this application, a possible specific implementation of identifying the to-be-upgraded component is provided. Specifically, before delivering the OTA upgrade task, the second node identifies the to-be-upgraded component in the OTA upgrade task, and determines whether the to-be-upgraded component is a charging-related component or a charging-unrelated component. The correspondingly generated first information may include the label corresponding to the first component and/or the label corresponding to the second component, and the label includes the charging-related label and/or the charging-unrelated label. Therefore, a label indicating "whether to support upgrade while charging" may be carried, based on whether the to-be-upgraded component is related to charging, when the OTA upgrade task is delivered, to indicate whether the vehicle can be charged in the OTA upgrade process.

According to a third aspect, an embodiment of this application provides an upgrade method, and the method may be performed by a communication apparatus. The communication apparatus may be a device, or may be a chip (system) or a circuit used in the device. This is not limited in this application. The method includes the following steps.

A second component receives third information from a first node. The third information indicates the second component to maintain a charging state in a process in which a first component performs over-the-air OTA upgrade.

The first component is a component unrelated to vehicle charging, and the second component is a component related to vehicle charging.

In this embodiment of this application, an upgrade method is provided, and is applied to a vehicle. The second component of the vehicle receives the third information from the first node of the vehicle, and maintains, based on an indication of the third information, the charging state in the process in which the first component of the vehicle performs OTA upgrade.

In this embodiment of this application, an OTA upgrade task is used by a to-be-upgraded component to perform OTA upgrade. The to-be-upgraded component may include the component (the second component) related to vehicle charging, or may include the component (the first component) unrelated to vehicle charging. The second information indicates the first component to perform OTA upgrade.

It may be understood that, when the to-be-upgraded component in the OTA upgrade task includes the first component and does not include the second component, the first component performs OTA upgrade, and the second component is in the charging state when the first component starts OTA upgrade. In this case, the second component continues to maintain the charging state, to implement OTA upgrade in a vehicle charging process, reduce OTA upgrade time and vehicle charging time, and improve vehicle use efficiency.

In comparison with a current OTA upgrade method in which vehicle use efficiency is severely affected because a vehicle cannot be used in an OTA upgrade process and OTA upgrade takes a long time, in the upgrade method in this embodiment of this application, when the component (the first component) unrelated to vehicle charging performs OTA upgrade, the component (the second component) that is related to vehicle charging and does not need to perform OTA upgrade temporarily and that is in the charging state may be indicated to continue to maintain the charging state without being affected by the OTA upgrade of the first component.

According to this embodiment of this application, when OTA upgrade is performed on the first component, the second component on which OTA upgrade does not need to be performed temporarily and that is in the charging state can continue to maintain the charging state, so that OTA upgrade is performed in a vehicle charging process, to reduce OTA upgrade time and vehicle charging time, and improve vehicle use efficiency.

It may be understood that the vehicle may be replaced with a terminal device. The terminal device may be a terminal device that supports a charging function, like an uncrewed aerial vehicle, an airborne vehicle, a ship, or a mobile robot, and that needs to download data through a wireless network to update local software.

In a possible implementation, the method further includes:
The second component receives fourth information from the first node. The fourth information indicates the second component to start OTA upgrade.

The second component is in the charging state before OTA upgrade is performed, and is in a non-charging state when OTA upgrade is performed.

In this implementation of this application, a possible specific implementation of indicating the second component to start OTA upgrade is provided. Specifically, when the to-be-upgraded component includes the second component, the second component receives fourth information from the first node. The fourth information indicates the second component to exit the charging state and start OTA upgrade. It may be understood that, when the to-be-upgraded component in the OTA upgrade task includes the first component and includes the second component, the first component performs OTA upgrade, and the second component is in the charging state before OTA upgrade is performed, and is in the non-charging state when OTA upgrade is performed, so that the vehicle can be charged when the charging-unrelated component is upgraded, and charging of the vehicle is suspended when the charging-related component is upgraded, to reduce the OTA upgrade time and the vehicle charging time, and the improve vehicle use efficiency.

In a possible implementation, the method further includes:
The second component sends fifth information to the first node. The fifth information indicates that the second component completes OTA upgrade.

The second component receives sixth information from the first node. The sixth information indicates the second component to maintain the charging state in the process in which the first component performs OTA upgrade.

In this implementation of this application, a possible specific implementation of indicating the second component to resume charging is provided. Specifically, the second component sends the fifth information to the first node, and receives the sixth information from the first node. The fifth information indicates that the second component completes OTA upgrade. The sixth information indicates the second component to maintain the charging state in the process in which the first component performs OTA upgrade. It may be understood that, when the to-be-upgraded component in the OTA upgrade task includes the first component and the second component, the first component performs OTA upgrade, the second component exits the charging state, and OTA upgrade is started. After the second component completes OTA upgrade, the second component resumes charging and re-enters the charging state, and may continue to maintain the charging state in the process in which the first component performs the OTA upgrade. According to this embodiment of this application, even if the charging-related component needs to be upgraded in the OTA upgrade task, impact on charging can be minimized, the OTA upgrade time and the vehicle charging time can be reduced, and the vehicle use efficiency can be improved.

According to a fourth aspect, an embodiment of this application provides a communication apparatus. The apparatus includes a module or a unit configured to perform the method according to any one of the first aspect.

In a possible design, the apparatus includes:
a communication unit, configured to receive first information from a second node, where the first information is used to perform over-the-air OTA upgrade on a to-be-upgraded component, the to-be-upgraded component includes at least one of a first component and a second component, the first component is a component unrelated to vehicle charging, and the second component is a component related to vehicle charging.

The communication unit is further configured to: when the to-be-upgraded component includes the first component, send second information to a first component. The second information indicates the first component to perform OTA upgrade.

If the to-be-upgraded component does not include the second component, and the second component is in a charging state when the first component starts OTA upgrade, the second component maintains the charging state.

In a possible implementation, the apparatus further includes:
a processing unit, configured to generate the second information.

In a possible implementation, the communication unit is further configured to output prompt information. The prompt information indicates that a vehicle can be charged in the OTA upgrade process.

In a possible implementation, the first information includes first indication information, and the first indication information indicates whether the vehicle supports charging in the OTA upgrade process.

In a possible implementation, the communication unit is further specifically configured to output the prompt information when the first indication information indicates that the vehicle supports charging in the OTA upgrade process.

In a possible implementation, the communication unit is further configured to send third information to the second component. The third information indicates the second component to maintain the charging state in a process in which the first component performs OTA upgrade.

In a possible implementation, the communication unit is further configured to: when the to-be-upgraded component includes the second component, send fourth information to the second component. The fourth information indicates the second component to start OTA upgrade, and the second component is in the charging state before OTA upgrade is performed, and is in a non-charging state when OTA upgrade is performed.

In a possible implementation, the communication unit is further configured to: receive fifth information from the second component. The fifth information indicates that the second component completes OTA upgrade.

The communication unit is further configured to send sixth information to the second component. The sixth information indicates the second component to maintain the charging state in the process in which the first component performs OTA upgrade.

In a possible implementation, the processing unit is further configured to: identify the to-be-upgraded component, and determine that the to-be-upgraded component includes the first component and/or the second component.

For technical effect brought by the fourth aspect and any possible implementation, refer to the descriptions of the technical effect corresponding to the first aspect and the corresponding implementations.

According to a fifth aspect, an embodiment of this application provides a communication apparatus. The apparatus includes a module or a unit configured to perform the method according to any one of the second aspect.

In a possible design, the apparatus includes:
a processing unit, configured to generate first information, where the first information indicates a first node to perform over-the-air OTA upgrade on a to-be-upgraded component, the to-be-upgraded component includes at least one of a first component and a second component, the first component is a component unrelated to vehicle charging, and the second component is a component related to vehicle charging; and
a communication unit, configured to send the first information to the first node.

If the to-be-upgraded component does not include the second component, and the second component is in a charging state when the first component starts OTA upgrade, the second component maintains the charging state.

In a possible implementation, the first information includes first indication information, and the first indication information indicates whether the vehicle supports charging in the OTA upgrade process.

In a possible implementation, the communication unit is further configured to: if the to-be-upgraded component does not include the second component, send seventh information to the first node. The seventh information indicates the second component to maintain the charging state in the process in which the first component performs OTA upgrade.

In a possible implementation, the communication unit is further configured to: if the to-be-upgraded component includes the second component, send eighth information to the first node. The eighth information indicates the second component to be in a non-charging state when OTA upgrade is performed.

In a possible implementation, the communication unit is further configured to send ninth information to the first node. The ninth information indicates the second component to maintain, after completing OTA upgrade, the charging state in the process in which the first component performs OTA upgrade.

In a possible implementation, the processing unit is further configured to: identify the to-be-upgraded component, and determine that the to-be-upgraded component includes the first component and/or the second component.

The first information includes a label corresponding to the first component and/or a label corresponding to the second component, and the label includes a charging-related label and/or a charging-unrelated label.

For technical effect brought by the fifth aspect and any possible implementation, refer to the descriptions of the technical effect corresponding to the second aspect and the corresponding implementations.

According to a sixth aspect, an embodiment of this application provides a communication apparatus. The apparatus includes a module or a unit configured to perform the method according to any one of the third aspect.

In a possible design, the apparatus includes:
a communication unit, configured to receive third information from a first node, where the third information indicates the communication apparatus to maintain a charging state in a process in which a first component performs over-the-air OTA upgrade.

The first component is a component unrelated to vehicle charging, and the communication apparatus is a component related to vehicle charging.

In a possible implementation, the apparatus further includes:
a processing unit, configured to determine, based on the third information, to maintain the charging state in the process in which the first component performs over-the-air OTA upgrade.

In a possible implementation, the communication unit is further configured to receive fourth information from the first node. The fourth information indicates the communication apparatus to start OTA upgrade.

The communication apparatus is in the charging state before performing OTA upgrade, and is in a non-charging state when OTA upgrade is performed.

In a possible implementation, the communication unit is further configured to: send fifth information to the first node. The fifth information indicates that the communication apparatus completes OTA upgrade.

The communication apparatus receives sixth information from the first node. The sixth information indicates the communication apparatus to maintain the charging state in the process in which the first component performs OTA upgrade.

For technical effect brought by the sixth aspect and any possible implementation, refer to the descriptions of the technical effect corresponding to the third aspect and the corresponding implementations.

Optionally, in the communication apparatus according to any one of the fourth aspect to the sixth aspect and the possible implementations of the fourth aspect to the sixth aspect:
in an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

According to a seventh aspect, an embodiment of this application provides a communication apparatus, and the communication apparatus includes a processor. The processor is coupled to a memory, and may be configured to execute instructions in the memory, to implement the method according to any one of the first aspect to the third aspect and the possible implementations of the first aspect to the third aspect. Optionally, the communication apparatus further includes a memory. Optionally, the communication apparatus further includes a communication interface, and the processor is coupled to the communication interface.

According to an eighth aspect, an embodiment of this application provides a communication apparatus, including a logic circuit and a communication interface. The communication interface is configured to receive information or send information. The logic circuit is configured to receive information or send information through the communication interface, so that the communication apparatus performs the method according to any one of the first aspect to the third aspect and the possible implementations of the first aspect to the third aspect.

According to a ninth aspect, an embodiment of this application provides a computer-readable storage medium. The computer-readable storage medium is configured to store a computer program (which may also be referred to as code or instructions). When the computer program runs on a computer, the method according to any one of the first aspect to the third aspect and the possible implementations of the first aspect to the third aspect is implemented.

According to a tenth aspect, an embodiment of this application provides a computer program product. The computer program product includes a computer program (which may also be referred to as code or instructions). When the computer program is run, a computer is enabled to perform the method according to any one of the first aspect to the third aspect and the possible implementations of the first aspect to the third aspect.

According to an eleventh aspect, an embodiment of this application provides a chip. The chip includes a processor. The processor is configured to execute instructions. When the processor executes the instructions, the chip is enabled to perform the method according to any one of the first aspect to the third aspect and the possible implementations of the first aspect to the third aspect. Optionally, the chip further includes a communication interface, and the communication interface is configured to receive a signal or send a signal.

According to a twelfth aspect, an embodiment of this application provides a vehicle. The vehicle includes at least one communication apparatus according to the fourth aspect, the communication apparatus according to the fifth aspect, the communication apparatus according to the sixth aspect, the communication apparatus according to the seventh aspect, the communication apparatus according to the eighth aspect, or the chip according to the eleventh aspect.

According to a thirteenth aspect, an embodiment of this application provides a system. The system includes a first node and a second node, the first node is configured to perform the method according to any one of the first aspect and the possible implementations, and the second node is configured to perform the method according to any one of the second aspect and the possible implementations.

Optionally, the system further includes a first component and/or a second component. The second component is configured to perform the method according to any one of the third aspect and the possible implementations.

According to a fourteenth aspect, an embodiment of this application provides a system. The system includes a first node and a second component. The first node is configured to perform the method according to any one of the first aspect and the possible implementations, and the second component is configured to perform the method according to any one of the third aspect and the possible implementations.

Optionally, the system further includes a first component and/or a second node. The second node is configured to perform the method according to any one of the second aspect and the possible implementations.

In addition, in a process of performing the method according to any one of the first aspect to the third aspect and the possible implementations, a process of sending information and/or receiving information in the foregoing method may be understood as a process in which a processor outputs information, and/or a process in which the processor receives input information. When outputting information, the processor may output the information to a transceiver (or a communication interface or a sending module), so that the transceiver transmits the information. After the information is output by the processor, other processing may further need to be performed on the information before the information reaches the transceiver. Similarly, when the processor receives input information, the transceiver (or the communication interface or the sending module) receives the information, and inputs the information to the processor. Further, after the transceiver receives the information, other processing may need to be performed on the information before the information is input to the processor.

Based on the foregoing principle, for example, sending information mentioned in the foregoing method may be understood as that the processor outputs information. For another example, receiving information may be understood as that the processor receives input information.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the third aspect and the possible implementations of the first aspect to the third aspect, the processor may be a processor specially configured to perform these methods, or may be a processor, for example, a general-purpose processor, that performs these methods by executing computer instructions in a memory. The memory may be a non-transitory (non-transitory) memory, for example, a read-only memory (Read-Only Memory, ROM). The memory and the processor may be integrated on a same chip, or may be disposed on different chips. A type of the memory and a manner in which the memory and the processor are disposed are not limited in embodiments of this application.

In a possible implementation, the at least one memory is located outside an apparatus.

In another possible implementation, the at least one memory is located in an apparatus.

In another possible implementation, a part of memories in the at least one memory are located in an apparatus, and the other part of memories are located outside the apparatus.

In this application, the processor and the memory may be alternatively integrated into one device. In other words, the processor and the memory may be alternatively integrated together.

According to embodiments of this application, when OTA upgrade is performed on a first component, a second component on which OTA upgrade does not need to be performed temporarily and that is in a charging state can continue to maintain the charging state, so that OTA upgrade is performed in a vehicle charging process, to reduce OTA upgrade time and vehicle charging time, and improve vehicle use efficiency.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1 is a diagram of an architecture of a vehicle upgrade system according to an embodiment of this application;
FIG. 2 is a diagram of an architecture of a vehicle according to an embodiment of this application;
FIG. 3 is a diagram of an architecture of a central computing architecture-based vehicle according to an embodiment of this application;
FIG. 4 is a diagram of a vehicle system upgrade architecture according to an embodiment of this application;
FIG. 5 is a schematic flowchart of an upgrade method according to an embodiment of this application;
FIG. 6 is a schematic flowchart of another upgrade method according to an embodiment of this application;
FIG. 7 is a schematic flowchart of another upgrade method according to an embodiment of this application;
FIG. 8 is a schematic flowchart of another upgrade method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, a process, method, system, product, device, or the like that includes a series of steps or units is not limited to the listed steps or units, but optionally further includes unlisted steps, units, or the like, or optionally further includes other steps or units inherent to the process, method, product, device, or the like.

An "embodiment" mentioned in this specification means that a particular feature, structure, or characteristic described with reference to embodiment may be included in at least one embodiment of this application. The phrase shown in various locations in this specification may not necessarily refer to a same embodiment, and is not an independent or optional embodiment exclusive from another embodiment. A person skilled in the art can explicitly and implicitly understand that in embodiments of this application, unless otherwise specified or there is a logical conflict, terms and/or descriptions in embodiments are consistent and may be mutually referenced, and technical features in different embodiments may be combined into a new embodiment based on an inner logical relationship between the technical features.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be noted that in this application, "indications" may include a direct indication, an indirect indication, an explicit indication, and an implicit indication. That a piece of indication information indicates A can be understood as follows: The indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It should be noted that in this application, "sending" can be understood as "outputting", and "receiving" can be understood as "inputting". In "sending information to A", "to A" indicates only a direction of information transmission, A is a destination, and "sending information to A" is not necessarily directly performed over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

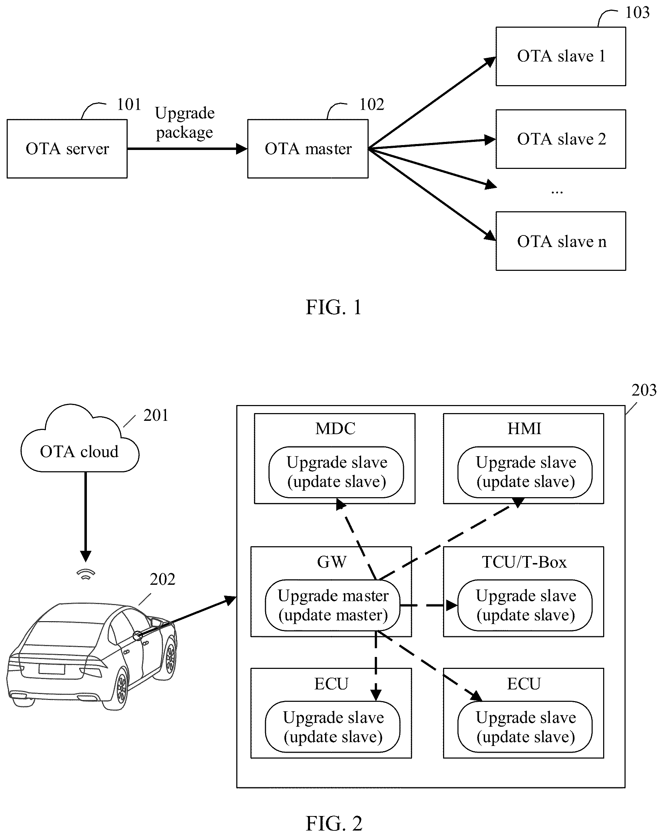

FIG. 1 is a diagram of a vehicle upgrade system according to an embodiment of this application.

As shown in FIG. 1, the upgrade system includes an OTA server (server) 101, an OTA master (Master) 102, and an OTA slave (slave) 103. In the preceding information:
The OTA server 101 is configured to send an upgrade data package to the OTA master. In some specific implementation scenarios, the OTA server is also referred to as an OTA cloud.

The OTA master (Master) 102 is an electronic device having a data receiving and sending capability, and may receive an upgrade package sent by the OTA server 101, and update a component of a vehicle based on the upgrade package. Specifically, the OTA master 102 distributes the received upgrade package to one or more OTA slaves 103 in the vehicle, and commands the one or more OTA slaves 103 to install and activate the upgrade package, to complete upgrade.

FIG. 2 is a diagram of a possible architecture of a vehicle according to an embodiment of this application.

As shown in FIG. 2, the vehicle architecture includes an OTA cloud 201 and a vehicle 202.

The vehicle 202 is an electrical/electronic architecture-based (electrical/electronic architecture, E/E) vehicle. Refer to an area 203. The vehicle 202 may include the following components: a mobile data center (mobile data center, MDC), human-machine interaction (human-machine interaction, HMI), a gateway (gateway, GW), a telematics box (telematics box, T-Box, or referred to as a TCU), and a module like an electronic control unit (electronic control unit, ECU). The GW is a core component in the electronic/electrical architecture of the vehicle. As a data exchange hub of a vehicle network, the GW can route network data across different networks such as a controller area network (controller area network, CAN), a local interconnect network (local interconnect network, LIN), media oriented system transport (media oriented system transport, Most), and FlexRay. The MDC is an intelligent vehicle-mounted computing platform of the vehicle. The T-Box is mainly configured to communicate with the outside of the vehicle, a background system, and a mobile phone application (application, APP). The HMI is an information entertainment system of the vehicle. The ECU is a microcomputer controller dedicated to the vehicle.

An update master (update master, which may be considered as an OTA master) is deployed in the GW of the vehicle 202, and update slaves (update slaves, which may be considered as OTA slaves) are deployed in other modules of the vehicle 202. The update master in the GW receives an upgrade package sent by the OTA cloud, and distributes the upgrade package to the update slave of a corresponding component, so that the update slave installs and activates the upgrade package, to complete component update. It can be learned that the update master in the GW is responsible for downloading the upgrade package of the vehicle and commanding each component to install the upgrade package. This brings a heavy burden to storage and load of the update master. For example, if the upgrade package is large, storage space of the update master may be insufficient.

In addition, because the vehicle 202 in FIG. 2 is the electronic/electrical architecture-based vehicle, and the GW is the core component in the electronic/electrical architecture of the vehicle, the update master may be deployed in the GW, to reduce routing complexity. However, in another vehicle architecture, as a quantity of components increases, a structure is complex. If the update master is used to upgrade an ECU with a long distance (the long distance may be understood as a large quantity of hops that need to be passed from the update master to the to-be-upgraded ECU), the vehicle upgrade efficiency is also affected.

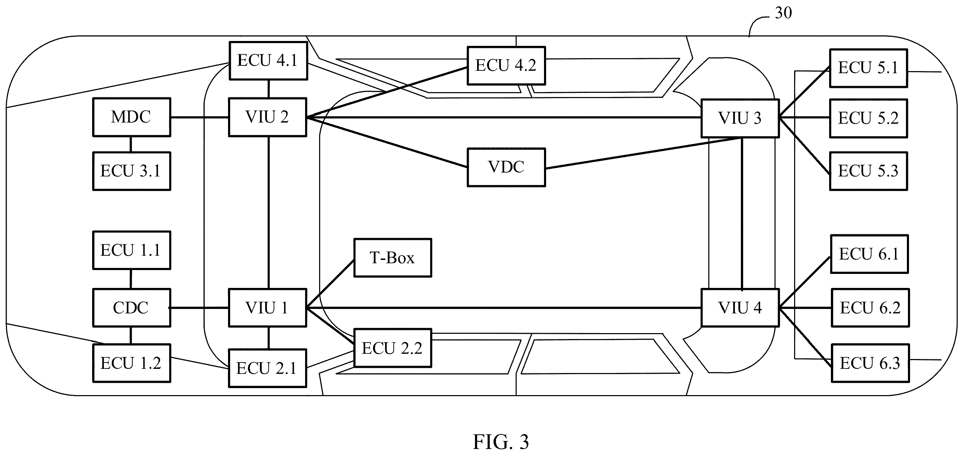

FIG. 3 is a diagram of an architecture of a central computing architecture-based vehicle according to an embodiment of this application.

As shown in FIG. 3, a vehicle 30 is a central computing architecture (central computing architecture, CCA)-based vehicle. A CCA includes several vehicle integrated/integration units (vehicle integrated/integration unit, VIU) and a plurality of vehicle components. A plurality of VIUs form a ring network, to implement high bandwidth (a high-definition camera and high-definition display), a low latency, and a high-reliability processing capability to continuously improve competitiveness, simplify vehicle-mounted network configurations, and improve upgrade and maintenance efficiency. A vehicle component (like an ECU or a T-Box) can be connected to the VIU, or connected to a domain controller (domain controller, DC) unit, like a cockpit domain controller (cockpit domain controller, CDC), an MDC, and a vehicle domain controller (vehicle domain controller, VDC), and then connected to the VIU through the DC. In this way, it is avoided that each vehicle component in a conventional system for implementing an electronic control function in a vehicle needs to be connected to a domain control DC unit through a respective wire harness, and a wire harness length in the system for implementing the electronic control function in the vehicle is reduced.

It may be understood that, in comparison with the vehicle electronic and electrical (electrical/electronic architecture, E/E) architecture used by the vehicle 202 in FIG. 2, in a plurality of components of the vehicle 30, some components are connected to a VIU 1 (for example, an ECU 2.1, an ECU 2.2, and a T-Box), some components are connected to a VIU 2 (for example, an ECU 4.1, an ECU 4.2, and an ECU 4.3), some components are connected to a VIU 3 (for example, an ECU 5.1, an ECU 5.2, and an ECU 5.3), and some components are connected to a VIU 4 (for example, an ECU 6.1, an ECU 6.2, and an ECU 6.3). In this case, if the update master is deployed in the T-Box, for the ECU 5.1 that needs to be upgraded, a path of the distributed upgrade package passes through buses of the VIU 1, the VIU 2, and the VIU 3, and then passes through the VIU 3 to the ECU 5.1. It can be learned that because the path for upgrade is complex (which may be understood as a large quantity of hops that need to be passed), a manner in which the update master node distributes the upgrade package increases complexity of vehicle upgrade, and efficiency is also affected.

It should be noted that, in the architecture shown in FIG. 3, a connection line in each node may be an Ethernet-based bus, or may be one or more of a controller area network (controller area network, CAN) bus, a local interconnect network (local interconnect network, LIN) bus, a media-oriented system transport (media-oriented system transport, Most) bus, FlexRay, and the like.

It may be understood that the diagram of the vehicle upgrade system shown in FIG. 1 is merely an example, and the diagrams of the vehicle architectures shown in FIG. 2 and FIG. 3 are merely examples. For a diagram of a vehicle upgrade system and a diagram of a vehicle architecture in other forms, refer to a related standard or protocol. Details are not described herein again.

The following embodiments may be applicable to the vehicle upgrade system shown in FIG. 1 and the vehicle architectures shown in FIG. 2 and FIG. 3, or may be applicable to other forms of vehicle upgrade system and vehicle architecture. Details are not described below again.

This application provides an upgrade method, applied to the field of connected vehicle technologies, for example, OTA upgrade of an intelligent vehicle. To describe the solutions of this application more clearly, the following first describes some knowledge related to OTA upgrade.

An over-the-air (over-the-air, OTA) technology is a technology for downloading data through a wireless network, and is currently widely used in upgrade of devices such as vehicles, televisions, mobile phones, tablet computers, or set-top boxes. For example, for the vehicle, firmware and software data in each controller in the vehicle may be remotely upgraded by using the OTA. A software administrator may upload software to a cloud, and the vehicle may automatically download or a user chooses to download the software from the cloud, to update local software, so as to implement function upgrade or function update of a local vehicle system. For example, an electronic control unit (electronic control unit, ECU) of the vehicle may be upgraded by using the OTA, and vehicle performance may be upgraded by upgrading the ECU. Due to convenience of OTA upgrade, the OTA technology is increasingly widely used.

However, currently, the OTA upgrade takes a long time (usually dozens of minutes to several hours), and the vehicle cannot be used in an OTA upgrade process, for example, most functions such as driving are unavailable. This severely affects vehicle use efficiency.

For a technical problem that OTA upgrade takes a long time and the vehicle cannot be used in an OTA upgrade process, which severely affects vehicle use efficiency, an embodiment of this application provides a vehicle system upgrade architecture, and proposes a new upgrade method based on the upgrade architecture, so that OTA upgrade can be performed in a vehicle charging process, OTA upgrade time and vehicle charging time are reduced, and the vehicle use efficiency is improved.

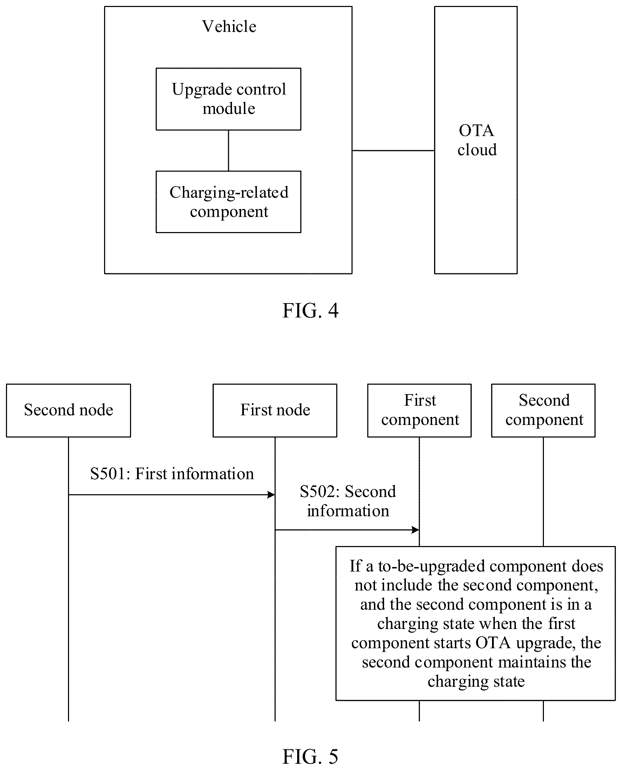

FIG. 4 is a diagram of a vehicle system upgrade architecture according to an embodiment of this application.

As shown in FIG. 4, the vehicle system upgrade architecture is mainly applied to OTA upgrade and charging, and relates to two parts: an OTA cloud and a vehicle.

The OTA cloud is connected to the vehicle through a wireless network. The vehicle can be further divided into an upgrade control module and a charging-related component. The charging-related component includes a component related to a vehicle charging service, for example, a battery management system (battery management system, BMS), an on-board charger (on-board charger, OBC), a direct current to direct current converter (DC/DC converter, DC/DC), a vehicle control unit (vehicle control unit, VCU), and a thermal management system (thermal management system, TMS).

Optionally, the vehicle in the vehicle system upgrade architecture may further include a charging-unrelated component, and the charging-unrelated component includes a component unrelated to the vehicle charging service. It may be understood that all components in the vehicle except the foregoing charging-related components may be considered as charging-unrelated components.

It may be understood that the OTA cloud in the vehicle system upgrade architecture shown in this embodiment of this application may be the OTA server (101) in the vehicle upgrade system shown in FIG. 1, or may be the OTA cloud (201) in the vehicle architecture shown in FIG. 2. The upgrade control module in the vehicle system upgrade architecture shown in this embodiment of this application may be the OTA master (102) in the vehicle upgrade system shown in FIG. 1, or may be the update master (OTA master) in the vehicle architecture shown in FIG. 2.

In FIG. 4, the OTA cloud is responsible for identifying an OTA upgrade object. If the OTA upgrade object includes the charging-related component, the OTA cloud delivers a label to notify the upgrade control module. The upgrade control module is responsible for responding to an OTA upgrade requirement, determines an OTA upgrade condition, and controls an OTA upgrade process. The charging-related component is configured to perform the vehicle charging service.

Based on the vehicle system upgrade architecture shown in FIG. 4, an embodiment of this application further provides a new upgrade method. The following describes the upgrade method with reference to FIG. 5 to FIG. 8.

FIG. 5 is a schematic flowchart of an upgrade method according to an embodiment of this application. The upgrade method is applied to the field of connected vehicle technologies, for example, OTA upgrade of a connected vehicle. Specifically, the upgrade method relates to a second node and a vehicle. The vehicle includes a first node, a first component, and a second component. The upgrade method includes but is not limited to the following steps.

S501: The second node sends first information to the first node, and correspondingly, the first node receives the first information from the second node.

S502: The first node sends second information to the first component, and correspondingly, the first component receives the second information from the first node.

It may be understood that the first node in this embodiment of this application is a device equipped with a processor/chip capable of executing computer-executable instructions, or may be a processor/chip capable of executing computer-executable instructions. This is not limited in embodiments of this application. Optionally, the first node may be a processor/chip in the connected vehicle, for example, may be specifically the OTA master (102) in the vehicle upgrade system shown in FIG. 1, or may be the update master (OTA master) in the vehicle architecture shown in FIG. 2, or may be the upgrade control module in the vehicle system upgrade architecture shown in FIG. 4, and is configured to perform the upgrade method in this embodiment of this application, to implement OTA upgrade in a vehicle charging process, so as to reduce OTA upgrade time and vehicle charging time, and improve vehicle use efficiency.

It may be understood that the second node in this embodiment of this application is a device equipped with a processor/chip capable of executing computer-executable instructions, or may be a processor/chip capable of executing computer-executable instructions. This is not limited in embodiments of this application. Optionally, the first node may be an OTA server that communicates with and interconnects with the connected vehicle, for example, may be specifically the OTA server (101) in the vehicle upgrade system shown in FIG. 1, or may be the OTA cloud (201) in the vehicle architecture shown in FIG. 2, or may be the OTA cloud in the vehicle system upgrade architecture shown in FIG. 4, and is configured to participate in the upgrade method in this embodiment of this application, to implement OTA upgrade in the vehicle charging process, so as to reduce the OTA upgrade time and the vehicle charging time, and improve the vehicle use efficiency.

It may be understood that the first component and the second component in this embodiment of this application are components that undertake one or more service functions in the vehicle. In terms of correlation with vehicle charging, the first component is a component unrelated to the vehicle charging service, and the second component is a component related to the vehicle charging service, for example, a battery management system (battery management system, BMS), an on-board charger (on-board charger, OBC), a direct current to direct current converter (DC/DC converter, DC/DC), a vehicle control unit (vehicle control unit, VCU), and a thermal management system (thermal management system, TMS). It may be understood that all components in the vehicle except the foregoing charging-related components may be considered as charging-unrelated components. The first component and the second component in this embodiment of this application participate in the upgrade method in this embodiment of this application, so that when OTA upgrade is performed on the first component, the second component on which OTA upgrade does not need to be performed temporarily and that is in a charging state can continue to maintain the charging state. In this way, OTA upgrade is performed in the vehicle charging process, to reduce the OTA upgrade time and the vehicle charging time, and improve the vehicle use efficiency.

It may be understood that the vehicle in this embodiment of this application may be replaced with a terminal device. The terminal device may be a terminal device that supports a charging function, like an uncrewed aerial vehicle, an airborne vehicle, a ship, or a mobile robot, and that needs to download data through a wireless network to update local software. This is not specifically limited in embodiments of this application.

The first information may be understood as an OTA upgrade task delivered by the second node, and is used by a to-be-upgraded component to perform OTA upgrade. The to-be-upgraded component includes at least one of the first component and the second component, the first component is a component unrelated to vehicle charging, and the second component is a component related to vehicle charging.

Optionally, after the first node receives the first information from the second node, the first node identifies the to-be-upgraded component in the OTA upgrade task, and determines that the to-be-upgraded component includes the first component and/or the second component, so that whether the vehicle is to be charged in the OTA upgrade process may be indicated based on whether the to-be-upgraded component is related to charging.

Alternatively, optionally, before the second node delivers the OTA upgrade task, the second node identifies the to-be-upgraded component, and determines that the to-be-upgraded component includes the first component and/or the second component. The corresponding first information generated by the second node based on an identification result may include a label corresponding to the first component and/or a label corresponding to the second component, and the label includes a charging-related label and/or a charging-unrelated label, so that based on whether the to-be-upgraded component is related to charging, the OTA upgrade task may be delivered with a label indicating "whether to support upgrade while charging" to indicate whether the vehicle supports charging in the OTA upgrade process.

The second information indicates the first component to perform OTA upgrade.

Specifically, when the to-be-upgraded component includes the first component, the first node sends the second information to the first component, to indicate the first component to perform OTA upgrade.

If the to-be-upgraded component does not include the second component, and the second component is in the charging state when the first component starts OTA upgrade, the second component continues to maintain the charging state.

It may be understood that, after receiving the OTA upgrade task delivered by the second node, when the to-be-upgraded component in the OTA upgrade task includes the first component, the first node sends the second information to the first component, to indicate the first component to perform OTA upgrade. In addition, if the to-be-upgraded component does not include the second component, and the second component is in the charging state when the first component starts OTA upgrade, the second component continues to maintain the charging state. In a process of maintaining the charging state, the second component supports only the charging service, that is, processes only a packet related to the charging service.

In comparison with a current OTA upgrade method in which vehicle use efficiency is severely affected because a vehicle cannot be used in an OTA upgrade process and OTA upgrade takes a long time, in the upgrade method in this embodiment of this application, the second information may be sent to the component (the first component) unrelated to vehicle charging, to indicate the component to perform OTA upgrade. In addition, the component (the second component) that is related to vehicle charging and does not need to perform OTA upgrade temporarily and that is in the charging state may continue to maintain the charging state without being affected by the OTA upgrade of the first component.

According to this embodiment of this application, when OTA upgrade is performed on the first component, the second component on which OTA upgrade does not need to be performed temporarily and that is in the charging state can continue to maintain the charging state, so that OTA upgrade is performed in the vehicle charging process, to reduce the OTA upgrade time and the vehicle charging time, and improve the vehicle use efficiency.

Optionally, if the to-be-upgraded component does not include the second component, and the second component is not in the charging state when the first component starts OTA upgrade, the second component maintains a current operating mode. Optionally, the first node may further indicate the second component to support the charging service in a time period of the upgrade process of the first component, so that the OTA upgrade of the first component and the charging service of the second component are simultaneously performed, thereby reducing the OTA upgrade time and the vehicle charging time, and improving the vehicle use efficiency.

In a possible embodiment, the first information further includes first indication information.

The first indication information indicates whether the vehicle supports charging in the OTA upgrade process.

It may be understood that when delivering the OTA upgrade task, the second node adds the label indicating "whether to support upgrade while charging". If the to-be-upgraded component does not include the second component, the first indication information indicates that the vehicle supports charging in the OTA upgrade process. The first node may learn, based on the label indicated by the first indication information, that the vehicle supports charging while performing OTA upgrade, to indicate to simultaneously perform OTA upgrade of the first component and the charging service of the second component, thereby reducing the OTA upgrade time and the vehicle charging time, and improving the vehicle use efficiency.

In a possible embodiment, the first node further outputs prompt information.

The prompt information indicates that the vehicle can be charged in the OTA upgrade process.

Optionally, the first node specifically outputs the prompt information when the first indication information indicates that the vehicle supports charging in the OTA upgrade process, to indicate that the vehicle can be charged in the OTA upgrade process.

It may be understood that, when the to-be-upgraded component does not include the second component, when delivering the OTA upgrade task, the second node adds a label indicating "supporting upgrade while charging", and the first node outputs the prompt information based on the indication of the label, to indicate that the vehicle can be charged in the OTA upgrade process.

Optionally, the prompt information may be displayed on a head unit interface, or the prompt information may be sent to a device connected to a head unit, for example, a mobile phone or an intelligent wearable device, to notify a user that the vehicle can be charged in the OTA upgrade process. For example, the user is notified in a form of screen, sound, light, electricity, vibration, or the like.

According to this embodiment of this application, the user may learn, based on the prompt information, that the vehicle supports charging while performing OTA upgrade, so that when the first component of the vehicle performs OTA upgrade, the second component continues to maintain the charging state, and charges the vehicle. Alternatively, the second component actively charges the vehicle in the time period in which the first component of the vehicle performs OTA upgrade.

In a possible embodiment, the first node further sends third information to the second component, and correspondingly, the second component receives the third information from the first node.

The third information indicates the second component to maintain the charging state in the process in which the first component performs OTA upgrade. When maintaining the charging state, the second component supports only the charging service, that is, processes only the packet related to the charging service.

It may be understood that, after the first node receives the OTA upgrade task delivered by the second node, when the to-be-upgraded component in the OTA upgrade task includes the first component and does not include the second component, the first component performs OTA upgrade, and the second component is in the charging state when the first component starts OTA upgrade. In this case, the second component continues to maintain the charging state, to implement OTA upgrade in the vehicle charging process, so as to reduce the OTA upgrade time and the vehicle charging time, and improve the vehicle use efficiency.

Optionally, if the to-be-upgraded component does not include the second component, the second node sends seventh information to the first node, and correspondingly, the first node receives the seventh information from the second node.

The seventh information indicates the second component to maintain the charging state in the process in which the first component performs OTA upgrade.

It may be understood that, after receiving the seventh information, the first node determines, based on an indication of the seventh information, to send the third information to the second component, to indicate the second component to maintain the charging state in the process in which the first component performs OTA upgrade.

It may be understood that, in the OTA upgrade task delivered by the second node to the first node, when the to-be-upgraded component in the OTA upgrade task includes the first component and does not include the second component, the first component performs OTA upgrade, and the second component is in the charging state when the first component starts OTA upgrade. In this case, the second component continues to maintain the charging state, to implement OTA upgrade in the vehicle charging process, so as to reduce the OTA upgrade time and the vehicle charging time, and improve the vehicle use efficiency.

In a possible embodiment, when the to-be-upgraded component includes the second component, the first node further sends fourth information to the second component, and correspondingly, the second component receives the fourth information from the first node.

The fourth information indicates the second component to exit the charging state and start OTA upgrade.

It may be understood that, after the first node receives the OTA upgrade task delivered by the second node, when the to-be-upgraded component in the OTA upgrade task includes the first component and includes the second component, the first component performs OTA upgrade, and the second component is in the charging state before OTA upgrade is performed, and is in a non-charging state when OTA upgrade is performed, so that the vehicle can be charged when the charging-unrelated component is upgraded, and charging of the vehicle is suspended when the charging-related component is upgraded, to reduce the OTA upgrade time and the vehicle charging time, and improve the vehicle use efficiency.

Optionally, when the to-be-upgraded component includes the second component, the second node sends eighth information to the first node, and correspondingly, the first node receives the eighth information from the second node.

The eighth information indicates the second component to exit the charging state, start OTA upgrade, and be in the non-charging state when OTA upgrade is performed.

It may be understood that after receiving the eighth information, the first node determines, based on an indication of the eighth information, to send the fourth information to the second component, to indicate the second component to exit the charging state and start OTA upgrade.

It may be understood that, in the OTA upgrade task delivered by the second node to the first node, when the to-be-upgraded component in the OTA upgrade task includes the first component and includes the second component, the first component performs OTA upgrade, and the second component is in the charging state before OTA upgrade is performed, and is in the non-charging state when OTA upgrade is performed, so that the vehicle can be charged when the charging-unrelated component is upgraded, and charging of the vehicle is suspended when the charging-related component is upgraded, to reduce the OTA upgrade time and the vehicle charging time, and improve the vehicle use efficiency.

Further, optionally, the second component sends fifth information to the first node, and correspondingly, the first node receives the fifth information from the second component.

The first node sends sixth information to the second component, and correspondingly, the second component receives the sixth information from the first node.

The fifth information indicates that the second component completes OTA upgrade, and the sixth information indicates the second component to maintain the charging state in the process in which the first component performs OTA upgrade.

It may be understood that, after the first node receives the OTA upgrade task delivered by the second node, when the to-be-upgraded component in the OTA upgrade task includes the first component and the second component, the first component performs OTA upgrade, the second component exits the charging state, and OTA upgrade is started. After the second component completes OTA upgrade, the second component resumes charging and re-enters the charging state, and may continue to maintain the charging state in the process in which the first component performs the OTA upgrade.

According to this embodiment of this application, even if the charging-related component needs to be upgraded in the OTA upgrade task, impact on charging can be minimized, the OTA upgrade time and the vehicle charging time can be reduced, and the vehicle use efficiency can be improved.

Optionally, the second node sends ninth information to the first node, and correspondingly, the first node receives the ninth information from the second node.

The ninth information indicates the second component to maintain, after completing OTA upgrade, the charging state in the process in which the first component performs OTA upgrade.

It may be understood that after receiving the ninth information, the first node determines, based on an indication of the ninth information, to send the sixth information to the second component, to indicate the second component to maintain the charging state in the process in which the first component performs OTA upgrade.

It may be understood that, in the OTA upgrade task delivered by the second node to the first node, when the to-be-upgraded component in the OTA upgrade task includes the first component and the second component, the first component performs OTA upgrade, the second component exits the charging state, and OTA upgrade is started. After the second component completes OTA upgrade, the second component resumes charging and re-enters the charging state, and may continue to maintain the charging state in the process in which the first component performs the OTA upgrade. According to this embodiment of this application, even if the charging-related component needs to be upgraded in the OTA upgrade task, impact on charging can be minimized, the OTA upgrade time and the vehicle charging time can be reduced, and the vehicle use efficiency can be improved.

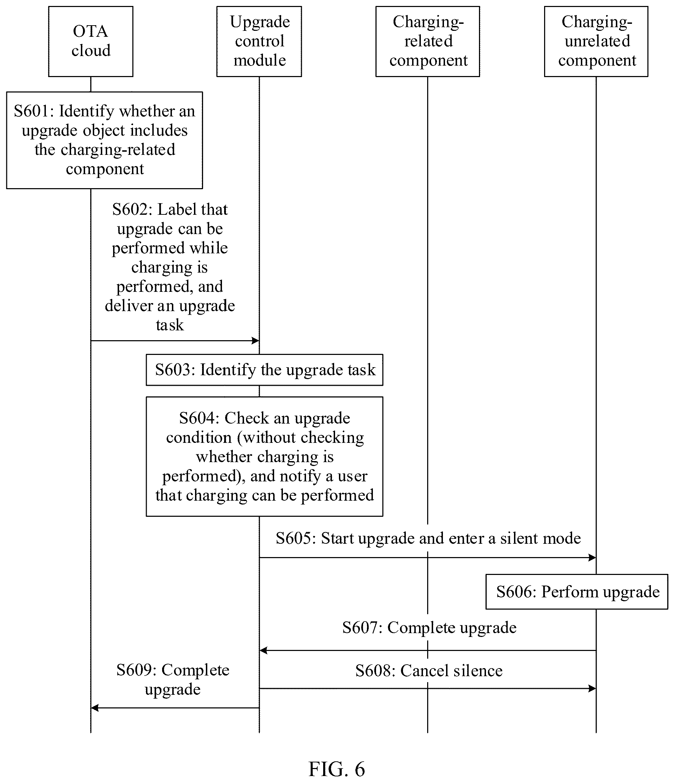

The following further describes the upgrade method shown in FIG. 5 with reference to FIG. 6 to FIG. 8.

FIG. 6 is a schematic flowchart of another upgrade method according to an embodiment of this application. It can be understood that steps in this embodiment of this application may be considered as a proper variation of or supplement to the embodiment in FIG. 5. Alternatively, it can be understood that the upgrade method in this embodiment of this application may be considered as an embodiment that can be independently performed. This is not limited in this application.

The upgrade method provided in this embodiment of this application is applied to the field of connected vehicle technologies, for example, OTA upgrade of a connected vehicle. Specifically, the upgrade method relates to an OTA cloud and a vehicle. The vehicle includes an upgrade control module, a charging-unrelated component, and a charging-related component. It may be understood that for the OTA cloud in this embodiment of this application, refer to the second node in the upgrade method shown in FIG. 5. For the upgrade control module in this embodiment of this application, refer to the first node in the upgrade method shown in FIG. 5. For the charging-unrelated component in this embodiment of this application, refer to the first component in the upgrade method shown in FIG. 5. For the charging-related component in this embodiment of this application, refer to the second component in the upgrade method shown in FIG. 5. Details are not described again in this embodiment of this application.

The upgrade method includes but is not limited to the following steps.

S601: When delivering an OTA upgrade task, the OTA cloud identifies whether an upgrade object includes the charging-related component (a component related to vehicle charging, for example, a BMS, an OBC, a DC/DC, a VCU, or a TMS).

It may be understood that for the OTA upgrade task in this embodiment of this application, refer to related descriptions of the first information in the upgrade method shown in FIG. 5. Details are not described herein again.

S602: If the upgrade object does not include the charging-related component, the OTA cloud adds a label indicating "supporting upgrade while charging" when delivering the upgrade task.

S603: The upgrade control module of a vehicle identifies the upgrade task, determines, based on the label carried in the upgrade task, that the vehicle supports upgrade while charging, and identifies the charging-unrelated component based on the label.

S604: The upgrade control module of the vehicle does not check "whether charging is performed" when checking an upgrade condition, and notifies a user that the vehicle can be charged. Specifically, the upgrade control module of the vehicle may notify the user that the vehicle can be charged in an OTA upgrade process through a head unit interface or by using an intelligent wearable device like a mobile phone that communicates and interconnects with a head unit.

S605: The upgrade control module of the vehicle starts to execute the upgrade task. Specifically, the upgrade control module of the vehicle notifies the charging-unrelated component to start upgrade, and enters a silent mode. In the silent mode, application packet communication of the charging-unrelated component is silent, and OTA upgrade is performed based on a diagnosis packet. If the vehicle is being charged at this time, the charging-related component continues to operate normally, and the vehicle remains charged.

It may be understood that, in this embodiment of this application, the upgrade control module of the vehicle notifies the charging-unrelated component to start upgrade. Specifically, the second information in the upgrade method shown in FIG. 5 may be sent to notify the charging-unrelated component to start upgrade. For the second information, refer to related descriptions of the upgrade method shown in FIG. 5. Details are not described herein again.

S606: The charging-unrelated component performs upgrade, which may be specifically performing OTA flushing based on the diagnosis packet.

S607: After the upgrade succeeds, the charging-unrelated component feeds back upgrade completion information to the upgrade control module.

S608: The upgrade control module notifies the charging-unrelated component to cancel silence, and the charging-unrelated component resumes a normal service.

S609: The upgrade control module feeds back an upgrade completion result to the OTA cloud.

In this embodiment of this application, the OTA cloud distinguishes between the charging-related component and/or the charging-unrelated component included in the upgrade object, and identifies, based on the upgrade object, that the charging upgrade task is supported. The vehicle identifies the charging upgrade task, does not take that charging is not supported as a check condition, and notifies the user that charging can be performed. The upgrade control module of the vehicle notifies only the charging-unrelated component to enter the silent mode, to perform OTA upgrade, and the charging-related component maintains the normal operating mode. According to this embodiment of this application, when the charging-related component is not upgraded, the user can charge the vehicle in the vehicle OTA upgrade process, and the OTA upgrade does not affect the charging process. This reduces the OTA upgrade time and the vehicle charging time, and improves the vehicle use efficiency.

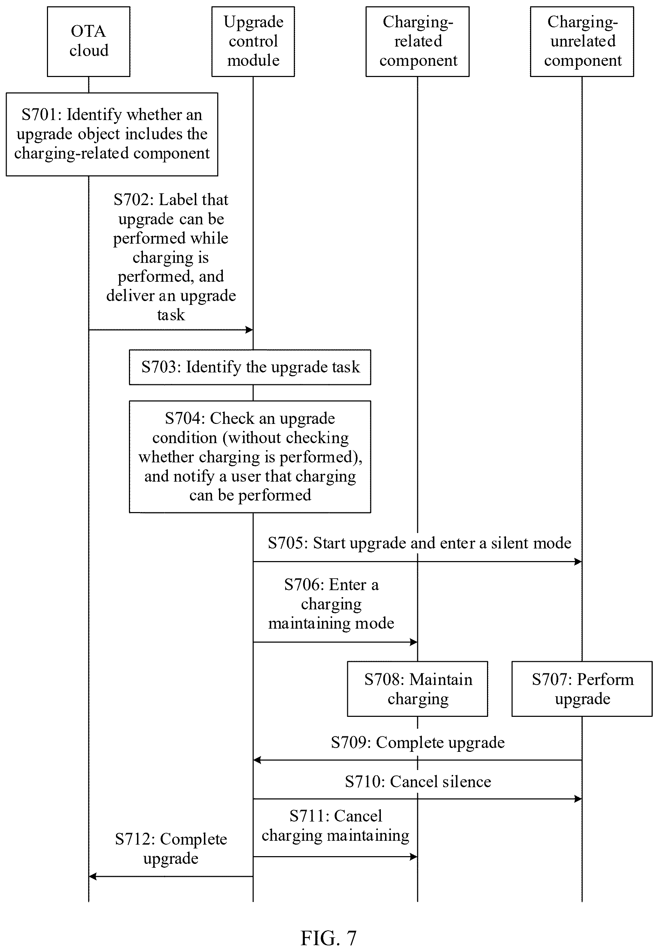

FIG. 7 is a schematic flowchart of another upgrade method according to an embodiment of this application. It can be understood that steps in this embodiment of this application may be considered as a proper variation of or supplement to the embodiment in FIG. 5. Alternatively, it can be understood that the upgrade method in this embodiment of this application may be considered as an embodiment that can be independently performed. This is not limited in this application.

The upgrade method provided in this embodiment of this application is applied to the field of connected vehicle technologies, for example, OTA upgrade of a connected vehicle. Specifically, the upgrade method relates to an OTA cloud and a vehicle. The vehicle includes an upgrade control module, a charging-unrelated component, and a charging-related component. It may be understood that for the OTA cloud in this embodiment of this application, refer to the second node in the upgrade method shown in FIG. 5. For the upgrade control module in this embodiment of this application, refer to the first node in the upgrade method shown in FIG. 5. For the charging-unrelated component in this embodiment of this application, refer to the first component in the upgrade method shown in FIG. 5. For the charging-related component in this embodiment of this application, refer to the second component in the upgrade method shown in FIG. 5. Details are not described again in this embodiment of this application.

The upgrade method includes but is not limited to the following steps.

S701: When delivering an OTA upgrade task, the OTA cloud identifies whether an upgrade object includes the charging-related component (a component related to vehicle charging, for example, a BMS, an OBC, a DC/DC, a VCU, or a TMS).

It may be understood that for the OTA upgrade task in this embodiment of this application, refer to related descriptions of the first information in the upgrade method shown in FIG. 5. Details are not described herein again.

S702: If the upgrade object does not include the charging-related component, the OTA cloud adds a label indicating "supporting upgrade while charging" when delivering the upgrade task.

S703: The upgrade control module of a vehicle identifies the upgrade task, determines, based on the label carried in the upgrade task, that the vehicle supports upgrade while charging, and identifies the charging-unrelated component and the charging-related component based on the label.

S704: The upgrade control module of the vehicle does not check "whether charging is performed" when checking an upgrade condition, and notifies a user that the vehicle can be charged. Specifically, the upgrade control module of the vehicle may notify the user that the vehicle can be charged in an OTA upgrade process through a head unit interface or by using an intelligent wearable device like a mobile phone that communicates and interconnects with a head unit.

S705: The upgrade control module of the vehicle starts to execute the upgrade task. Specifically, the upgrade control module of the vehicle notifies the charging-unrelated component to start upgrade, and enters a silent mode. In the silent mode, application packet communication of the charging-unrelated component is silent, and OTA upgrade is performed based on a diagnosis packet.

It may be understood that, in this embodiment of this application, the upgrade control module of the vehicle notifies the charging-unrelated component to start upgrade. Specifically, the second information in the upgrade method shown in FIG. 5 may be sent to notify the charging-unrelated component to start upgrade. For the second information, refer to related descriptions of the upgrade method shown in FIG. 5. Details are not described herein again.

S706: The upgrade control module of the vehicle notifies the charging-related component to enter a charging maintaining mode. In the charging maintaining mode, the charging-related component supports only a charging service, that is, processes only a packet related to the charging service.

S707: The charging-unrelated component performs upgrade, which may be specifically performing OTA flushing based on the diagnosis packet.

S708: The charging-related component maintains only the charging service (or maintains only communication with the charging-related component), and if the vehicle is being charged, the vehicle maintains to be charged.

S709: After the upgrade succeeds, the charging-unrelated component feeds back upgrade completion information to the upgrade control module.

S710: The upgrade control module notifies the charging-unrelated component to cancel silence, and the charging-unrelated component resumes a normal service.

S711: The upgrade control module notifies the charging-related component to cancel charging maintaining, and the charging-related component resumes a normal service.

S712: The upgrade control module feeds back an upgrade completion result to the OTA cloud.

In this embodiment of this application, the OTA cloud distinguishes between the charging-related component and the charging-unrelated component included in the upgrade object, and identifies, based on the upgrade object, that the charging upgrade task is supported. The vehicle identifies the charging upgrade task, does not take that charging is not supported as a check condition, and notifies the user that charging can be performed. The upgrade control module of the vehicle notifies only the charging-unrelated component to enter the silent mode, to perform OTA upgrade, and the charging-related component maintains the charging service. According to this embodiment of this application, when the charging-related component is not upgraded, the user can charge the vehicle in the vehicle OTA upgrade process, and the OTA upgrade does not affect the charging process. The charging-related component maintains only the charging service in the OTA upgrade process of the charging-unrelated component, to reduce interference to the OTA upgrade, reduce the OTA upgrade time, and improve the vehicle use efficiency.

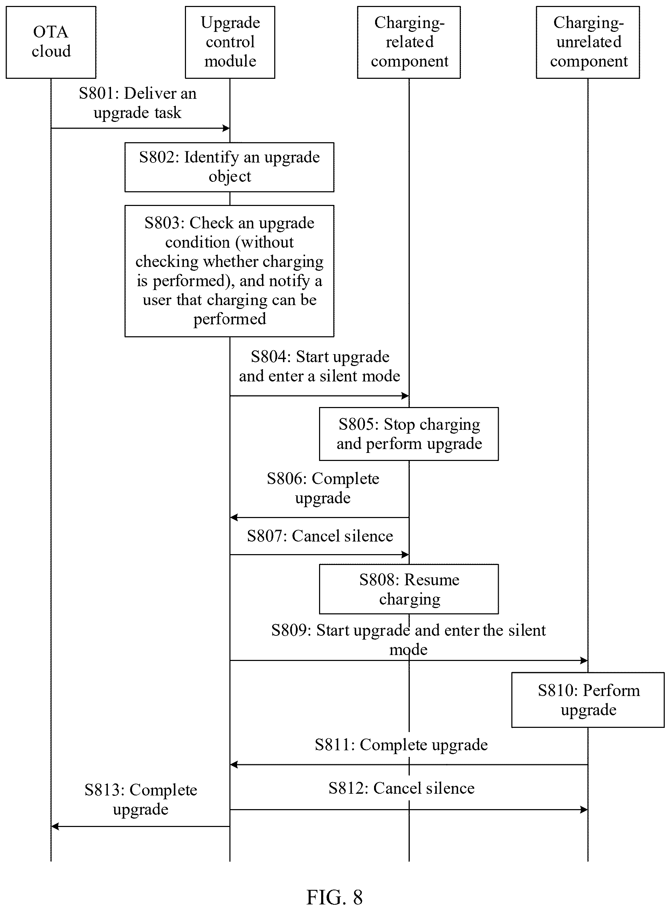

FIG. 8 is a schematic flowchart of another upgrade method according to an embodiment of this application. It can be understood that steps in this embodiment of this application may be considered as a proper variation of or supplement to the embodiment in FIG. 5. Alternatively, it can be understood that the upgrade method in this embodiment of this application may be considered as an embodiment that can be independently performed. This is not limited in this application.

The upgrade method provided in this embodiment of this application is applied to the field of connected vehicle technologies, for example, OTA upgrade of a connected vehicle. Specifically, the upgrade method relates to an OTA cloud and a vehicle. The vehicle includes an upgrade control module, a charging-unrelated component, and a charging-related component. It may be understood that for the OTA cloud in this embodiment of this application, refer to the second node in the upgrade method shown in FIG. 5. For the upgrade control module in this embodiment of this application, refer to the first node in the upgrade method shown in FIG. 5. For the charging-unrelated component in this embodiment of this application, refer to the first component in the upgrade method shown in FIG. 5. For the charging-related component in this embodiment of this application, refer to the second component in the upgrade method shown in FIG. 5. Details are not described again in this embodiment of this application.

The upgrade method includes but is not limited to the following steps.

S801: The OTA cloud delivers an OTA upgrade task, where the OTA upgrade task includes an upgrade object.

It may be understood that for the OTA upgrade task in this embodiment of this application, refer to related descriptions of the first information in the upgrade method shown in FIG. 5. Details are not described herein again.

S802: The upgrade control module of a vehicle identifies the upgrade object, and identifies the charging-related component (for example, a component such like a BMS, an OBC, a DC/DC, a VCU, or a TMS that is related to vehicle charging) and the charging-unrelated component that are included in the upgrade object.

S803: If the upgrade object includes the charging-related component, the upgrade control module of the vehicle does not check "whether charging is performed" when checking an upgrade condition, and notifies a user that the vehicle can be charged. Specifically, the upgrade control module of the vehicle may notify the user that the vehicle can be charged in an OTA upgrade process through a head unit interface or by using an intelligent wearable device like a mobile phone that communicates and interconnects with a head unit.

S804: The upgrade control module of the vehicle notifies the charging-related component to start upgrade, and enters a silent mode. In the silent mode, application packet communication of the charging-related component is silent, and OTA upgrade is performed based on a diagnosis packet.

S805: The charging-related component stops charging, and starts to perform upgrade, which may be specifically performing OTA flushing based on the diagnosis packet.

S806: After the upgrade succeeds, the charging-related component feeds back upgrade completion information to the upgrade control module.

S807: The upgrade control module notifies the charging-related component to cancel silence, and the charging-related component resumes a normal service.

S808: The charging-related component resumes the normal service, which may be specifically resuming charging.

S809: The upgrade control module of the vehicle notifies the charging-unrelated component to start upgrade, and enters a silent mode. In the silent mode, application packet communication of the charging-unrelated component is silent, and OTA upgrade is performed based on a diagnosis packet.

It may be understood that, in this embodiment of this application, the upgrade control module of the vehicle notifies the charging-unrelated component to start upgrade. Specifically, the second information in the upgrade method shown in FIG. 5 may be sent to notify the charging-unrelated component to start upgrade. For the second information, refer to related descriptions of the upgrade method shown in FIG. 5. Details are not described herein again.

S810: The charging-unrelated component performs upgrade, which may be specifically performing OTA flushing based on the diagnosis packet.

S811: After the upgrade succeeds, the charging-unrelated component feeds back upgrade completion information to the upgrade control module.

S812: The upgrade control module notifies the charging-unrelated component to cancel silence, and the charging-unrelated component resumes a normal service.

S813: The upgrade control module feeds back an upgrade completion result to the OTA cloud.

It may be understood that there is no fixed sequence for performing steps S804 to S808 and steps S809 to S812, and the steps S804 to S808 and the steps S809 to S812 may be simultaneously performed. This is not limited in this embodiment of this application.

In this embodiment of this application, the vehicle identifies the upgrade object, and distinguishes between the charging-related component and the charging-unrelated component that are included in the upgrade object. When the charging-related component is upgraded, charging of the charging-related component is suspended. After upgrade is completed, charging of the charging-related component is resumed, and the charging-unrelated component is upgraded at the same time. According to this embodiment of this application, even if the upgrade object includes the charging-related component and the charging-unrelated component, impact on charging can be minimized, the OTA upgrade time and the vehicle charging time can be reduced, and the vehicle use efficiency can be improved.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

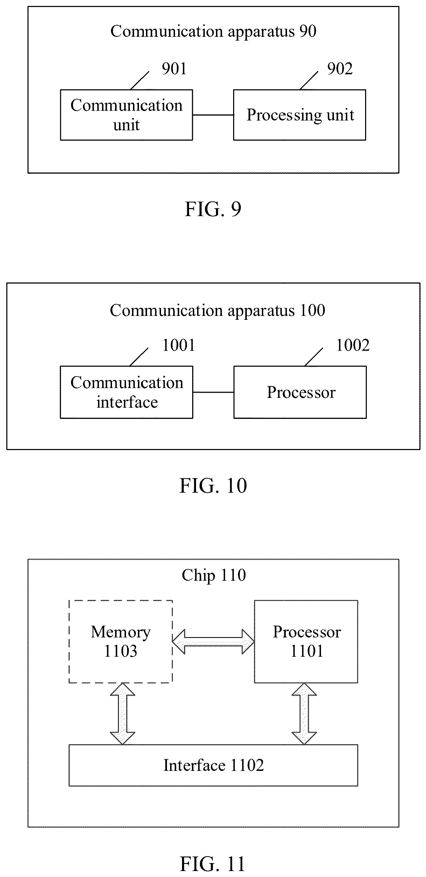

FIG. 9 is a diagram of a structure of a communication apparatus according to an embodiment of this application.

As shown in FIG. 9, the communication apparatus 90 may include a communication unit 901 and a processing unit 902. The communication unit 901 and the processing unit 902 may be software, hardware, or a combination of software and hardware.

The communication unit 901 may implement a sending function and/or a receiving function, and the communication unit 901 may also be described as a transceiver unit. Alternatively, the communication unit 901 may be a unit integrating an obtaining unit and a sending unit. The obtaining unit is configured to implement a receiving function, and the sending unit is configured to implement a sending function. Optionally, the communication unit 901 may be configured to receive information sent by another apparatus, and may be further configured to send information to the another apparatus.

In a possible design, the communication apparatus 90 may correspond to the first node in the method embodiments shown in FIG. 5, FIG. 6, FIG. 7, and FIG. 8. For example, the communication apparatus 90 may be the first node, or may be a chip in the first node. The communication apparatus 90 may include units configured to perform operations performed by the first node in the method embodiments shown in FIG. 5, FIG. 6, FIG. 7, and FIG. 8. In addition, the units in the communication apparatus 90 are respectively for implementing the operations performed by the first node in the method embodiments shown in FIG. 5, FIG. 6, FIG. 7, and FIG. 8. The units are described as follows:
a communication unit 901, configured to receive first information from a second node, where the first information is used to perform over-the-air OTA upgrade on a to-be-upgraded component, the to-be-upgraded component includes at least one of a first component and a second component, the first component is a component unrelated to vehicle charging, and the second component is a component related to vehicle charging.

The communication unit 901 is further configured to: when the to-be-upgraded component includes the first component, send second information to a first component. The second information indicates the first component to perform OTA upgrade.

If the to-be-upgraded component does not include the second component, and the second component is in a charging state when the first component starts OTA upgrade, the second component maintains the charging state.

In a possible implementation, the apparatus further includes:
a processing unit 902, configured to generate the second information.

In a possible implementation, the communication unit 901 is further configured to output prompt information. The prompt information indicates that a vehicle can be charged in the OTA upgrade process.

In a possible implementation, the first information includes first indication information, and the first indication information indicates whether the vehicle supports charging in the OTA upgrade process.

In a possible implementation, the communication unit 901 is further specifically configured to output the prompt information when the first indication information indicates that the vehicle supports charging in the OTA upgrade process.

In a possible implementation, the communication unit 901 is further configured to send third information to the second component. The third information indicates the second component to maintain the charging state in a process in which the first component performs OTA upgrade.

In a possible implementation, the communication unit 901 is further configured to: when the to-be-upgraded component includes the second component, send fourth information to the second component. The fourth information indicates the second component to start OTA upgrade, and the second component is in the charging state before OTA upgrade is performed, and is in a non-charging state when OTA upgrade is performed.

In a possible implementation, the communication unit 901 is further configured to: receive fifth information from the second component. The fifth information indicates that the second component completes OTA upgrade.

The communication unit 901 is further configured to send sixth information to the second component. The sixth information indicates the second component to maintain the charging state in the process in which the first component performs OTA upgrade.

In a possible implementation, the processing unit 902 is further configured to: identify the to-be-upgraded component, and determine that the to-be-upgraded component includes the first component and/or the second component.

For technical effect brought by this design and any possible implementation, refer to descriptions of technical effect corresponding to FIG. 5, FIG. 6, FIG. 7, FIG. 8, and corresponding implementations.

In another possible design of the communication apparatus 90 shown in FIG. 9, the communication apparatus 90 may correspond to the second node in the method embodiments shown in FIG. 5, FIG. 6, FIG. 7, and FIG. 8. For example, the communication apparatus 90 may be the second node, or may be a chip in the second node. The communication apparatus 90 may include units configured to perform operations performed by the second node in the method embodiments shown in FIG. 5, FIG. 6, FIG. 7, and FIG. 8. In addition, the units in the communication apparatus 90 are respectively for implementing the operations performed by the second node in the method embodiments shown in FIG. 5, FIG. 6, FIG. 7, and FIG. 8. The units are described as follows:
a processing unit 902, configured to generate first information, where the first information indicates a first node to perform over-the-air OTA upgrade on a to-be-upgraded component, the to-be-upgraded component includes at least one of a first component and a second component, the first component is a component unrelated to vehicle charging, and the second component is a component related to vehicle charging; and
a communication unit 901, configured to send the first information to the first node.

If the to-be-upgraded component does not include the second component, and the second component is in a charging state when the first component starts OTA upgrade, the second component maintains the charging state.

In a possible implementation, the first information includes first indication information, and the first indication information indicates whether a vehicle supports charging in an OTA upgrade process.

In a possible implementation, the communication unit 901 is further configured to: if the to-be-upgraded component does not include the second component, send seventh information to the first node. The seventh information indicates the second component to maintain the charging state in the process in which the first component performs OTA upgrade.

In a possible implementation, the communication unit 901 is further configured to: if the to-be-upgraded component includes the second component, send eighth information to the first node. The eighth information indicates the second component to be in a non-charging state when OTA upgrade is performed.

In a possible implementation, the communication unit 901 is further configured to send ninth information to the first node. The ninth information indicates the second component to maintain, after completing OTA upgrade, the charging state in the process in which the first component performs OTA upgrade.

In a possible implementation, the processing unit 902 is further configured to: identify the to-be-upgraded component, and determine that the to-be-upgraded component includes the first component and/or the second component.

The first information includes a label corresponding to the first component and/or a label corresponding to the second component, and the label includes a charging-related label and/or a charging-unrelated label.

For technical effect brought by this design and any possible implementation, refer to descriptions of technical effect corresponding to FIG. 5, FIG. 6, FIG. 7, FIG. 8, and corresponding implementations.

In another possible design of the communication apparatus 90 shown in FIG. 9, the communication apparatus 90 may correspond to the second component in the method embodiments shown in FIG. 5, FIG. 6, FIG. 7, and FIG. 8. For example, the communication apparatus 90 may be the second component, or may be a chip in the second component. The communication apparatus 90 may include units configured to perform operations performed by the second component in the method embodiments shown in FIG. 5, FIG. 6, FIG. 7, and FIG. 8. In addition, the units in the communication apparatus 90 are respectively for implementing the operations performed by the second component in the method embodiments shown in FIG. 5, FIG. 6, FIG. 7, and FIG. 8. The units are described as follows:
a communication unit 901, configured to receive third information from a first node, where the third information indicates the communication apparatus to maintain a charging state in a process in which a first component performs over-the-air OTA upgrade.

The first component is a component unrelated to vehicle charging, and the communication apparatus is a component related to vehicle charging.

In a possible implementation, the apparatus further includes:
a processing unit 902, configured to determine, based on the third information, to maintain the charging state in the process in which the first component performs over-the-air OTA upgrade.

In a possible implementation, the communication unit 901 is further configured to receive fourth information from the first node. The fourth information indicates the communication apparatus to start OTA upgrade.

The communication apparatus is in the charging state before performing OTA upgrade, and is in a non-charging state when OTA upgrade is performed.

In a possible implementation, the communication unit 901 is further configured to: send fifth information to the first node. The fifth information indicates that the communication apparatus completes OTA upgrade.

The communication apparatus receives sixth information from the first node. The sixth information indicates the communication apparatus to maintain the charging state in the process in which the first component performs OTA upgrade.

Optionally, in any possible design of the communication apparatus 90 shown in FIG. 9,
in an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

According to this embodiment of this application, the units in the apparatus shown in FIG. 9 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In other embodiments of this application, an electronic device may alternatively include other units. In actual application, the functions may be alternatively implemented with assistance of the other units, and may be implemented by a plurality of units in collaboration.

It should be noted that, for implementation of each unit, refer to the corresponding descriptions in the method embodiments shown in FIG. 5, FIG. 6, FIG. 7, and FIG. 8.

In the communication apparatus 90 described in FIG. 9, when OTA upgrade is performed on a first component, a second component on which OTA upgrade does not need to be performed temporarily and that is in a charging state can continue to maintain the charging state, so that OTA upgrade is performed in a vehicle charging process, to reduce OTA upgrade time and vehicle charging time, and improve vehicle use efficiency.

Refer to FIG. 10. FIG. 10 is a diagram of a structure of a communication apparatus according to an embodiment of this application.

It should be understood that the communication apparatus 100 shown in FIG. 10 is merely an example. The communication apparatus in this embodiment of this application may further include another component, or includes components whose functions are similar to those of components in FIG. 10, or does not need to include all components in FIG. 10.

The communication apparatus 100 includes a communication interface 1001 and at least one processor 1002.

The communication apparatus 100 may correspond to any node or device of the first node, the second node, or the second component. The communication interface 1001 is configured to: send a signal and receive a signal, and the at least one processor 1002 executes program instructions, to enable the communication apparatus 100 to implement a corresponding procedure of a method performed by a corresponding device in the foregoing method embodiments.

In a possible design, the communication apparatus 100 may correspond to the first node in the method embodiments shown in FIG. 5, FIG. 6, FIG. 7, and FIG. 8. For example, the communication apparatus 100 may be the first node, or may be a chip in the first node. The communication apparatus 100 may include components configured to perform the operations performed by the first node in the foregoing method embodiments, and the components in the communication apparatus 100 are separately configured to implement the operations performed by the first node in the foregoing method embodiments. Specific operations may be as follows:

A first node receives first information from a second node. The first information is used to perform over-the-air OTA upgrade on a to-be-upgraded component, the to-be-upgraded component includes at least one of a first component and a second component, the first component is a component unrelated to vehicle charging, and the second component is a component related to vehicle charging.

When the to-be-upgraded component includes the first component, the first node sends second information to the first component. The second information indicates the first component to perform OTA upgrade.

If the to-be-upgraded component does not include the second component, and the second component is in a charging state when the first component starts OTA upgrade, the second component maintains the charging state.

In a possible implementation, the method further includes:
The first node outputs prompt information, and the prompt information indicates that a vehicle can be charged in an OTA upgrade process.

In a possible implementation, the first information includes first indication information, and the first indication information indicates whether a vehicle supports charging in an OTA upgrade process.

In a possible implementation, that the first node outputs the prompt information includes:
When the first indication information indicates that the vehicle supports charging in the OTA upgrade process, the first node outputs the prompt information.

In a possible implementation, the method further includes:
The first node sends third information to the second component, and the third information indicates the second component to maintain the charging state in a process in which the first component performs OTA upgrade.

In a possible implementation, the method further includes:
When the to-be-upgraded component includes the second component, the first node sends fourth information to the second component. The fourth information indicates the second component to start OTA upgrade, and the second component is in the charging state before OTA upgrade is performed, and is in a non-charging state when OTA upgrade is performed.

In a possible implementation, the method further includes:
The first node receives fifth information from the second component, and the fifth information indicates that the second component completes OTA upgrade.

The first node sends sixth information to the second component, and the sixth information indicates the second component to maintain the charging state in the process in which the first component performs OTA upgrade.

In a possible implementation, after that the first node receives the first information from the second node, the method further includes:

The first node identifies the to-be-upgraded component, and determines that the to-be-upgraded component includes the first component and/or the second component.

In a possible design, the communication apparatus 100 may correspond to the second node in the method embodiments shown in FIG. 5, FIG. 6, FIG. 7, and FIG. 8. For example, the communication apparatus 100 may be the second node, or may be a chip in the second node. The communication apparatus 100 may include components configured to perform the operations performed by the second node in the foregoing method embodiments, and the components in the communication apparatus 100 are separately configured to implement the operations performed by the second node in the foregoing method embodiments. Specific operations may be as follows:

A second node generates first information. The first information indicates the first node to perform over-the-air OTA upgrade on a to-be-upgraded component, the to-be-upgraded component includes at least one of a first component and a second component, the first component is a component unrelated to vehicle charging, and the second component is a component related to vehicle charging.

The second node sends the first information to the first node.

If the to-be-upgraded component does not include the second component, and the second component is in a charging state when the first component starts OTA upgrade, the second component maintains the charging state.

In a possible implementation, the first information includes first indication information, and the first indication information indicates whether a vehicle supports charging in an OTA upgrade process.

In a possible implementation, the method further includes:
If the to-be-upgraded component does not include the second component, the second node sends seventh information to the first node. The seventh information indicates the second component to maintain the charging state in a process in which the first component performs OTA upgrade.

In a possible implementation, the method further includes:
If the to-be-upgraded component includes the second component, the second node sends eighth information to the first node, and the eighth information indicates the second component to be in a non-charging state when OTA upgrade is performed.

In a possible implementation, the method further includes:
The second node sends ninth information to the first node. The ninth information indicates the second component to maintain, after completing OTA upgrade, the charging state in the process in which the first component performs OTA upgrade.

In a possible implementation, before that the second node generates the first information, the method further includes:
The second node identifies the to-be-upgraded component, and determines that the to-be-upgraded component includes the first component and/or the second component.

The first information includes a label corresponding to the first component and/or a label corresponding to the second component, and the label includes a charging-related label and/or a charging-unrelated label.

In another possible design, the communication apparatus 100 may correspond to the second component in the method embodiments shown in FIG. 5, FIG. 6, FIG. 7, and FIG. 8. For example, the communication apparatus 100 may be the second component, or may be a chip in the second component. The communication apparatus 100 may include components configured to perform the operations performed by the second component in the foregoing method embodiments, and the components in the communication apparatus 100 are separately configured to implement the operations performed by the second component in the foregoing method embodiments. Specific operations may be as follows:
A second component receives third information from a first node. The third information indicates the second component to maintain a charging state in a process in which a first component performs over-the-air OTA upgrade.

The first component is a component unrelated to vehicle charging, and the second component is a component related to vehicle charging.

In a possible implementation, the method further includes:
The second component receives fourth information from the first node. The fourth information indicates the second component to start OTA upgrade.

The second component is in the charging state before OTA upgrade is performed, and is in a non-charging state when OTA upgrade is performed.

In a possible implementation, the method further includes:
The second component sends fifth information to the first node. The fifth information indicates that the second component completes OTA upgrade.

The second component receives sixth information from the first node. The sixth information indicates the second component to maintain the charging state in the process in which the first component performs OTA upgrade.

For technical effect brought by this design and any possible implementation, refer to descriptions of technical effect corresponding to FIG. 5, FIG. 6, FIG. 7, FIG. 8, and corresponding implementations.

In the communication apparatus 100 described in FIG. 10, when OTA upgrade is performed on a first component, a second component on which OTA upgrade does not need to be performed temporarily and that is in a charging state can continue to maintain the charging state, so that OTA upgrade is performed in a vehicle charging process, to reduce OTA upgrade time and vehicle charging time, and improve vehicle use efficiency.

For a case in which the communication apparatus may be a chip or a chip system, refer to a diagram of a structure of a chip shown in FIG. 11.

As shown in FIG. 11, a chip 110 includes a processor 1101 and an interface 1102. There may be one or more processors 1101, and there may be a plurality of interfaces 1102. It should be noted that a function corresponding to each of the processor 1101 and the interface 1102 may be implemented by using a hardware design, or may be implemented by using a software design, or may be implemented by using a combination of software and hardware. This is not limited herein.

Optionally, the chip 110 may further include a memory 1103, and the memory 1103 is configured to store necessary program instructions and data.

In this application, the processor 1101 may be configured to invoke, from the memory 1103, a program for implementing, on one or more devices or nodes of the first node, the second node, and the second component, the communication method provided in one or more embodiments of this application, and execute instructions included in the program. The interface 1102 may be configured to output an execution result of the processor 1101. In this application, the interface 1102 may be specifically configured to output each message or each piece of information of the processor 1101.

For the upgrade method provided in one or more embodiments of this application, refer to the embodiments shown in FIG. 5, FIG. 6, FIG. 7, and FIG. 8. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 5, FIG. 6, FIG. 7, and FIG. 8 may be implemented.

According to the methods provided in embodiments of this application, an embodiment of this application further provides a computer program product. The computer program product includes a computer program. When the computer program is run on a processor, the methods shown in FIG. 5, FIG. 6, FIG. 7, and FIG. 8 may be implemented.

An embodiment of this application further provides a system. The system includes at least one of the communication apparatus 90, the communication apparatus 100, or the chip 110, and is configured to perform steps performed by a corresponding device in any one of the embodiments in FIG. 5, FIG. 6, FIG. 7, and FIG. 8.

An embodiment of this application further provides a system. The system includes a first node and a second node. The first node is configured to perform the steps performed by the first node in any one of the embodiments in FIG. 5, FIG. 6, FIG. 7, and FIG. 8. The second node is configured to perform the steps performed by the second node in any one of the embodiments in FIG. 5, FIG. 6, FIG. 7, and FIG. 8.

Optionally, the system further includes a first component and/or a second component. The second component is configured to perform the steps performed by the second component in any one of the embodiments in FIG. 5, FIG. 6, FIG. 7, and FIG. 8.

An embodiment of this application provides a system. The system includes a first node and a second component. The first node is configured to perform the steps performed by the first node in any one of the embodiments in FIG. 5, FIG. 6, FIG. 7, and FIG. 8. The second component is configured to perform the steps performed by the second component in any one of the embodiments in FIG. 5, FIG. 6, FIG. 7, and FIG. 8.

Optionally, the system further includes a first component and/or a second node. The second node is configured to perform the steps performed by the second node in any one of the embodiments in FIG. 5, FIG. 6, FIG. 7, and FIG. 8.

An embodiment of this application further provides a processing apparatus. The apparatus includes a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing (digital signal processor, DSP) circuit, or may be a micro controller unit (micro controller unit, MCU), or may be a programmable logic device (programmable logic device, PLD) or another integrated chip. The processing apparatus may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

All or some of the foregoing embodiments may be implemented by software, hardware, firmware, or any combination thereof. When software is used to implement the embodiments, all or some of embodiments may be implemented in a form of computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disc, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and other steps except sending and receiving may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An upgrade method, comprising:
receiving, by a first node, first information from a second node, wherein the first information is used to perform over-the-air OTA upgrade on a to-be-upgraded component, the to-be-upgraded component comprises at least one of a first component and a second component, the first component is a component unrelated to vehicle charging, and the second component is a component related to vehicle charging;
when the to-be-upgraded component comprises the first component, sending, by the first node, second information to the first component, wherein the second information indicates the first component to perform OTA upgrade; and
if the to-be-upgraded component does not comprise the second component, and the second component is in a charging state when the first component starts OTA upgrade, maintaining, by the second component, the charging state.

2. The method according to claim 1, wherein the method further comprises:
outputting, by the first node, prompt information, wherein the prompt information indicates that a vehicle is capable of being charged in an OTA upgrade process.

3. The method according to claim 1 or 2, wherein the first information comprises first indication information, and the first indication information indicates whether the vehicle supports charging in the OTA upgrade process.

4. The method according to any one of claims 1 to 3, wherein the method further comprises:
sending, by the first node, third information to the second component, wherein the third information indicates the second component to maintain the charging state in a process in which the first component performs OTA upgrade.

5. The method according to any one of claims 1 to 4, wherein the method further comprises:
when the to-be-upgraded component comprises the second component, sending, by the first node, fourth information to the second component, wherein the fourth information indicates the second component to start OTA upgrade, and the second component is in the charging state before OTA upgrade is performed, and is in a non-charging state when OTA upgrade is performed.

6. The method according to claim 5, wherein the method further comprises:
receiving, by the first node, fifth information from the second component, wherein the fifth information indicates that the second component completes OTA upgrade; and
sending, by the first node, sixth information to the second component, wherein the sixth information indicates the second component to maintain the charging state in the process in which the first component performs OTA upgrade.

7. The method according to any one of claims 1 to 6, wherein after the receiving, by the first node, the first information from the second node, the method further comprises:
identifying, by the first node, the to-be-upgraded component, and determining that the to-be-upgraded component comprises the first component and/or the second component.

8. An upgrade method, comprising:
generating, by a second node, first information, wherein the first information indicates the first node to perform over-the-air OTA upgrade on a to-be-upgraded component, the to-be-upgraded component comprises at least one of a first component and a second component, the first component is a component unrelated to vehicle charging, and the second component is a component related to vehicle charging;
sending, by the second node, the first information to the first node; and
if the to-be-upgraded component does not comprise the second component, and the second component is in a charging state when the first component starts OTA upgrade, maintaining, by the second component, the charging state.

9. The method according to claim 8, wherein the first information comprises first indication information, and the first indication information indicates whether a vehicle supports charging in an OTA upgrade process.

10. The method according to claim 8 or 9, wherein the method further comprises:
if the to-be-upgraded component does not comprise the second component, sending, by the second node, seventh information to the first node, wherein the seventh information indicates the second component to maintain the charging state in a process in which the first component performs OTA upgrade.

11. The method according to any one of claims 8 to 10, wherein the method further comprises:
if the to-be-upgraded component comprises the second component, sending, by the second node, eighth information to the first node, wherein the eighth information indicates the second component to be in a non-charging state when OTA upgrade is performed.

12. The method according to claim 11, wherein the method further comprises:
sending, by the second node, ninth information to the first node, wherein the ninth information indicates the second component to maintain, after completing OTA upgrade, the charging state in the process in which the first component performs OTA upgrade.

13. The method according to any one of claims 8 to 12, wherein before the generating, by the second node, the first information, the method further comprises:
identifying, by the second node, the to-be-upgraded component, and determining that the to-be-upgraded component comprises the first component and/or the second component, wherein
the first information comprises a label corresponding to the first component and/or a label corresponding to the second component, and the label comprises a charging-related label and/or a charging-unrelated label.

14. A communication apparatus, comprising a module or a unit configured to perform the method according to any one of claims 1 to 7 or claims 8 to 13.

15. A communication apparatus, comprising a processor, wherein
when the processor invokes a computer program or instructions in a memory, the method according to any one of claims 1 to 7 is performed, or the method according to any one of claims 8 to 13 is performed.

16. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 7 or claims 8 to 13, to obtain processed data, and the interface is configured to output the processed data.

17. A computer-readable storage medium, comprising:
the computer-readable storage medium is configured to store instructions or a computer program, wherein when the instructions or the computer program is executed, the method according to any one of claims 1 to 7 is implemented, or the method according to any one of claims 8 to 13 is implemented.

18. A computer program product, comprising instructions or a computer program, wherein
when the instructions or the computer program is executed, the method according to any one of claims 1 to 7 is performed, or the method according to any one of claims 8 to 13 is performed.

19. A vehicle, comprising the communication apparatus according to claim 14, the communication apparatus according to claim 15, or the communication apparatus according to claim 16.

20. A system, comprising a first node and a second node, wherein
the first node is configured to perform the method according to any one of claims 1 to 7, and the second node is configured to perform the method according to any one of claims 8 to 13.
